# EUROPEAN PATENT APPLICATION

(11) **EP 1 016 884 A2**
(43) Date of publication of application: **05.07.2000**
(21) Application number: 99310454.6
(22) Date of filing: 22.12.1999
(51) Int. Cl.: G02B 6/28, H04J 14/02

(54) **Interferometric optical device including an optical resonator**

(30) Priority: 23.12.1998 CA 2256963; 25.03.1999 US 275962; 23.06.1999 US 338925; 22.07.1999 US 358445; 22.07.1999 CA 2278358; 26.08.1999 US 383069; 30.09.1999 US 409434
(71) Applicant: JDS Uniphase Inc., Nepean, Ontario K2G 5W8 (CA)
(72) Inventor: Copner, Nigel, North Gower, Ontario K0A 2T0 (CA); Paiam, Reza, Ottawa, Ontario K1V 9V8 (CA); Farries, Mark, Nepean, Ontario K2E 6L5 (CA); Colbourne, Paul, Nepean, Ontario K2G 3Y6 (CA); Philipson, Joshua B.J., Ottawa, Ontario K1R 5R5 (CA); Keyworth, Barrie, Stittsville, Ontario K2S 1M2 (CA); Xie, Jimin, Alymer, Quebec J9J 2P1 (CA); Fu, Xiaoli, Nepean, Ontario K2E 6J4 (CA)
(74) Representative: Gray, John James

(57) **Abstract**

A method and circuit is disclosed wherein two waveguides coupled to an optical resonant ring resonator are further coupled such that beams propagating therein interfere with one another to provide a desired output response. In one embodiment, multiplexed channels of light can be demultiplexed by the device described heretofore, or alternatively, the phase relationship between these two beams can be altered prior to their being combined to provide, for example, a linearised output response useful in applications such as wavelength locking. By varying the reflectivity of the FSR and the coupling ratios and/or by varying the phase relationship between the two beams, a variety of desired output responses can be realised. By providing suitable coupling ratios and providing optical path lengths of the two waveguides which are identical between the ring resonator and the couplers coupling the two waveguides as well as having the couplers placed 180 degrees opposite to each other, an interleaver/de-interleaver function is realised. In other embodiments, different forms of optical cavity resonators (etalons) are used instead of the ring resonator.

## Description

This invention relates to generally to a multi-port optical cavity and more particularly to an optical cavity having at least three-ports and use thereof.

Using optical signals as a means of carrying channelled information at high speeds through an optical path such as an optical waveguide, for example optical fibres, is preferable over other schemes such as those using microwave links, coaxial cables, and twisted copper wires, since in the former, propagation loss is lower, and optical systems are immune to Electro-Magnetic Interference (EMI), and have higher channel capacities. High-speed optical systems have signalling rates of several megabits per second to several tens of gigabits per second.

Optical communication systems are nearly ubiquitous in communication networks. The expression herein "Optical communication system" relates to any system that uses optical signals at any wavelength to convey information between two points through any optical path. Optical communication systems are described for example, in Gower, Ed. Optical Communication Systems, (Prentice Hall, NY) 1993, and by P.E. Green, Jr in "Fiber Optic Networks" (Prentice Hall New Jersey) 1993, which are incorporated herein by reference.

As communication capacity is further increased to transmit an ever-increasing amount of information on optical fibres, data transmission rates increase and available bandwidth becomes a scarce resource.

High speed data signals are plural signals that are formed by the aggregation (or multiplexing) of several data streams to share a transmission medium for transmitting data to a distant location. Wavelength Division Multiplexing (WDM) is commonly used in optical communications systems as means to more efficiently use available resources. In WDM each high-speed data channel transmits its information at a pre-allocated wavelength on a single optical waveguide. At a receiver end, channels of different wavelengths are generally separated by narrow band filters and then detected or used for further processing. In practice, the number of channels that can be carried by a single optical waveguide in a WDM system is limited by crosstalk, narrow operating bandwidth of optical amplifiers and/or optical fibre non-linearities. Moreover such systems require an accurate band selection, stable tunable lasers or filters, and spectral purity that increase the cost of WDM systems and add to their complexity. This invention relates to a method and system for filtering or separating closely spaced channels that would otherwise not be suitably filtered by conventional optical filters.

Currently, internationally agreed upon channel spacing for high-speed optical transmission systems, is 100 GHz, equivalent to 0.8 nm, surpassing, for example 200 GHz channel spacing equivalent to 1.6 nanometres between adjacent channels. Of course, as the separation in wavelength between adjacent channels decreases, the requirement for more precise demultiplexing circuitry capable of ultra-narrow-band filtering, absent crosstalk, increases. The use of conventional dichroic filters to separate channels spaced by 0.4 nm or less without crosstalk, is not practicable; such filters being difficult if not impossible to manufacture.

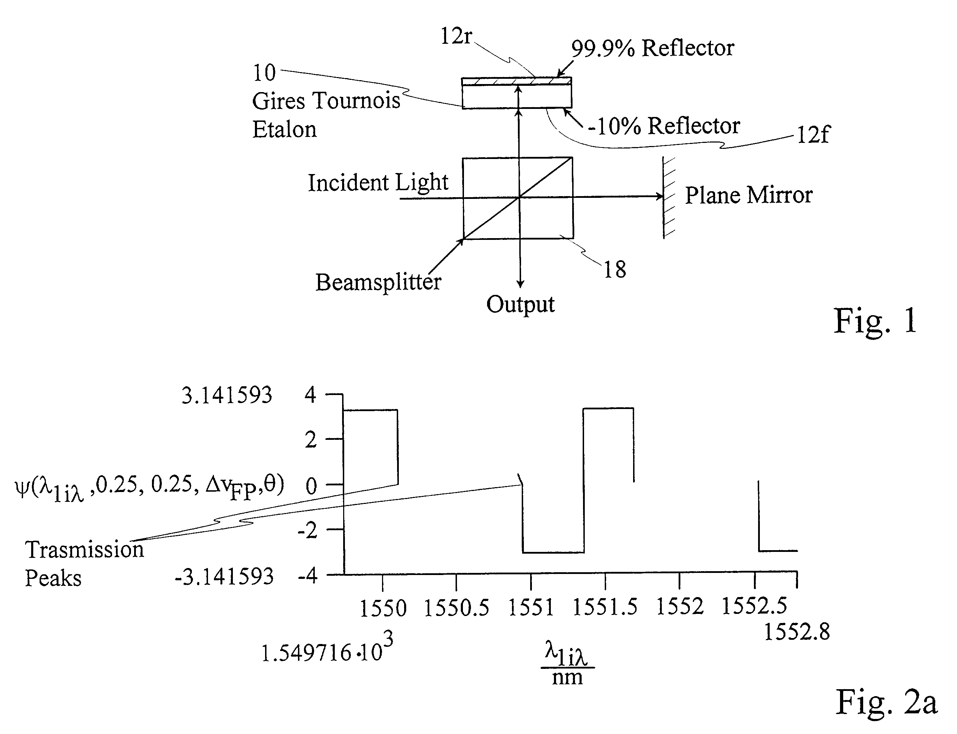

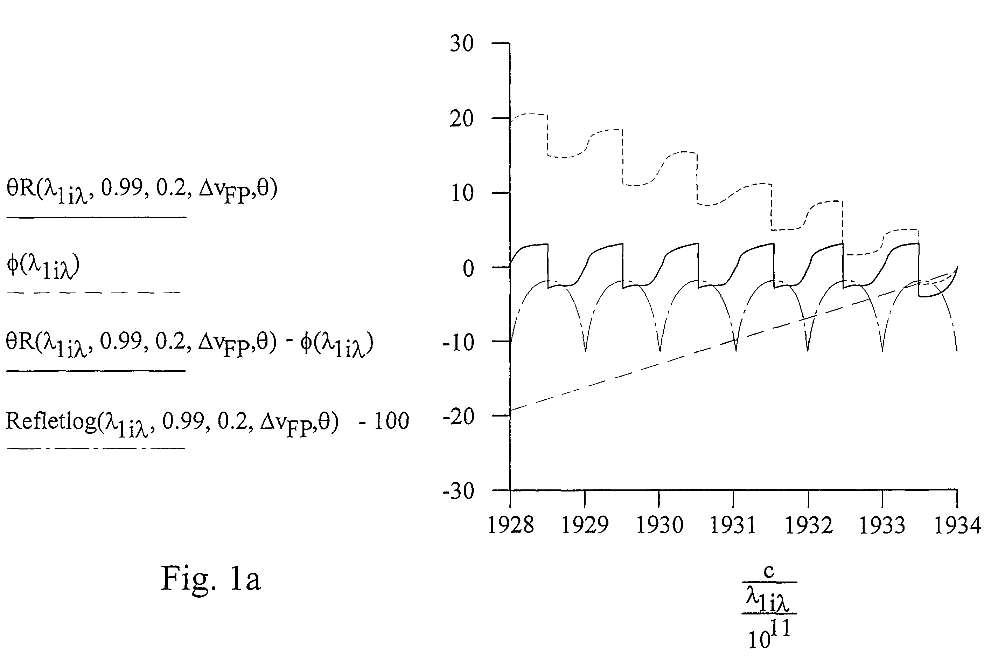

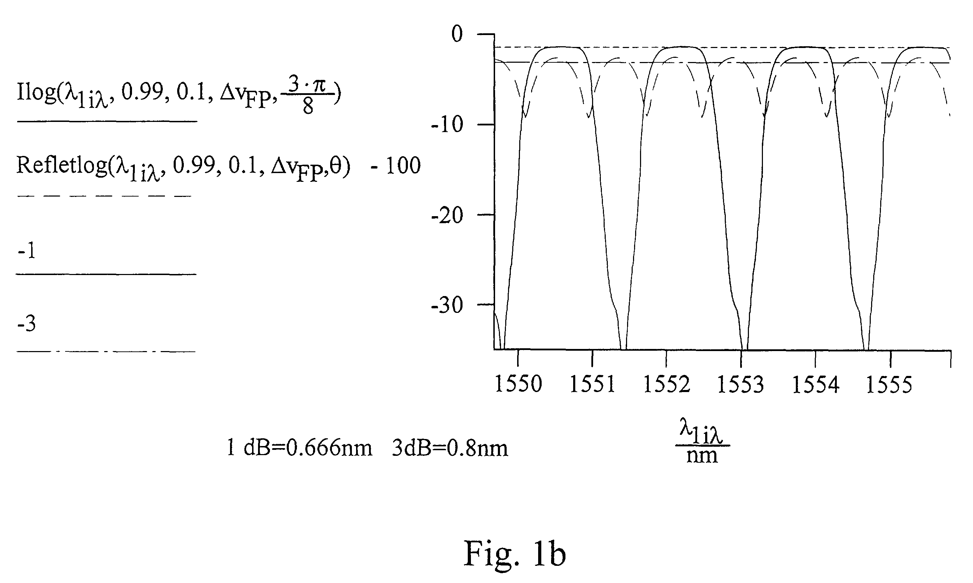

In a paper entitled "Multifunction optical filter with a Michelson-Gires-Turnois interferometer for wavelength-division-multiplexed network system applications", by Benjamin B. Dingle and Masayuki Izutsu published 1998, by the Optical Society of America, a device hereafter termed the GT device provides some of the functionality provided by the instant invention. For example, the GT device as exemplified in Fig. 1 serves as a narrow band wavelength demultiplexer; this device relies on interfering a reflected E-field with an E-field reflected by a plane mirror 16. The etalon 10 used has a 99.9% reflective back reflector 12r and a front reflector 12f having a reflectivity of about 10%; hence an output signal from only the front reflector 12f is utilised. A beam splitting prism (BSP) 18 is disposed to receive an incident beam and to direct the incident beam to the etalon 10. The BSP 18 further receives light returning from the etalon and provides a portion of that light to the plane mirror 16 and a remaining portion to an output port.

Although this known GT device appears to perform its intended function, it appears to have certain limitations: As opposed to the device of the instant invention which has a phase difference between transmitted and reflected E-fields of 0 and π radians, the GT as can be seen in the graph of Fig. 1b has some variation in phase between 0 and π radians. Furthermore, in the GT device a finite optical path difference is required in the interferometer to produce an output response that mimics the one provided by the device of the instant invention. Typically for a 50 GHz free spectral range (FSR) this optical path difference would be a few millimetres; in contrast in the instant invention the optical phase difference need only be approximately λ/4 resulting in a more temperature stable and insensitive system. One further limitation of the GT device is its apparent requirement in the stabilisation of both the etalon and the interferometer. Yet a further drawback to the GT device is the requirement for an optical circulator to extract the output signal adding to signals loss and increased cost of the device; and the requirement of a BSP which is known to have a significant polarisation dependent loss. Fig. 1a shows a graph with a linear plot of the phase difference between the two reflected E-fields from the GT and a mirror with an optical path difference. Further, the graph shows a linear plot of phase variation of reflected light from the GT. A reflection profile is also shown in a logarithmic plot, and a straight sloped dotted line is a linear plot of a GT with a finite optical path difference.

It is an object of this invention to provide a method and circuit for separating an optical signal having closely spaced channels into at least two optical signals wherein channel spacing between adjacent channels is greater in each of the at least two optical signals, thereby requiring less precise filters to demultiplex channels carried by each of the at least two signals.

The present invention is believed to overcome many of the limitations of the prior art GT device and of other known multiplexing and demultiplexing devices.

Embodiments of this invention provide a relatively inexpensive optical circuit for interleaving or de-interleaving optical channels.

Embodiments of this invention provide an etalon based device wherein output signals from two oppositely disposed ports can be controllably interferometrically combined to yield a desired output response.

A wavelength interferometer can be made using a Mach-Zehnder interferometer(MZI). Notwithstanding, the spectral response of the MZI is sinusoidal and consequently does not have a desired flat-top characteristic passband; hence, its spectral window for low crosstalk, is small.

A paper by K. Oda et al., entitled "A wide-band guided-wave periodic multi/demultiplexer with a ring resonator for optical FDM transmission systems", JLT, vol. 6, no. 6, pp 1016-1022, June 1988, discloses improving the spectral response of the MZI and a suitable step-like response can be obtained by adding an all-wave filter such as a ring resonator to one arm of the MZ as is shown in Fig. 1. However, it is generally difficult to implement a low-loss ring resonator in a system having a free-spectral range (FSR) of 100 GHz or 50 GHz.

Embodiments of the instant invention obviate the problems associated with the bulk optics GT device described heretofore, and obviates a device requiring a ring resonator.

Some embodiments of the invention are planar waveguide implementations for a wavelength interleaver based on an MZ interferometer.

Certain embodiments of the invention aim to provide an interleaver that uses an asymmetric MZ combined with a suitable resonator disposed on the shorter arm of the MZ. Advantageously, the use of a planar waveguide MZ interferometer allows the setting of a required length difference between two arms of the MZ, very accurately.

Various independent aspects of the invention will now be defined.

In accordance with a first aspect of the invention, there is provided, a filtering device comprising:
- a resonant optical cavity having a first and a second partially transmissive reflector, said resonant optical cavity having a first port disposed at the first partially transmissive reflector and a second port disposed at the second partially transmissive reflector; and,
- means for combining light beams, said means being optically coupled with the first and second ports of the resonant optical cavity, said means being capable of combining light beams exiting the first and second port so that they interfere to provide one or more output beams of light.

Further, a filtering device is provided comprising:
- an optical resonator having a first and a second waveguide coupled thereto, one of the first and the second waveguides having an end for receiving an input signal to be filtered, the first and the second waveguide being optically coupled with the optical resonator at a first and second location respectively, for allowing light to couple into the resonator from one or more of the waveguides and or into one or more of the waveguides from the resonator;
- an optical coupler for coupling light within the two waveguides between said waveguides, the coupler being at a location along the waveguides such that output ends of the waveguides provide a filtering of said input light.

Yet further, there is provided a filtering device comprising:
- an optical ring resonator having a first and a second waveguide coupled thereto, one of the first and the second waveguides having an end for receiving an input signal to be filtered, the first and the second waveguide being optically coupled with the optical resonator at a first and second location respectively, for allowing light to couple into the ring resonator from one or more of the waveguides and or into one or more of the waveguides from the resonator;
- a 50:50 optical coupler for coupling light within the two waveguides between said waveguides, the coupler being at a location along the waveguides such that output ends of the waveguides provide a filtering of said input light.

In accordance with a different aspect of the invention, there is provided:
- a first coupler having an input port and at least two output ports;
- a second coupler having two input ports and two output ports, the at least two output ports of the first coupler being optically coupled with the two output ports of the second coupler;
- an optical cavity having a partially reflective surface E at one end and a reflective surface at another end with a higher reflectivity E', the optical cavity being optically coupled to one of the at least two output ports of the first coupler and at one of the two output ports of the second coupler.

There is further provided, an interleaver/de-interleaver circuit comprising:
- a Mach-Zehnder interferometer having two optical branch paths between two 50/50 couplers, one of the two branch paths including an etalon within the path, such that light traversing said one branch path is coupled from one of the couplers to the other after resonating within the etalon, light traversing another of the two branch paths interfering with the light traversing the other branch path within one of the two couplers.

There is still further provided, an interleaver/de-interleaver comprising:
a MZ-interferometer having an input/output port and two output/input ports;
- a GT resonator optically coupled with the MZ- interferometer, the GT resonator for providing additional filtering and for lessening the sinusoidal shape of de-interleaved channels.

There is still further provided, a filtering device comprising:
- an asymmetric interleaver/de-interleaver having an optical resonator for multiplexing and de-interleaving two streams of optical signals, the two streams having substantially different bandwidths.

In accordance with another aspect of the invention, a filtering device is provided comprising:
- an asymmetric interleaver/de-interleaver having an optical resonator for multiplexing and de-interleaving two streams of optical signals, the two streams having substantially different bandwidths.

In an embodiment the optical resonator is a an etalon having mirror reflectivities that provides substantially different channel spacing for two de-interleaved streams.

There is further provided a plurality of etalons for enhancing isolation.

In another aspect of the invention a filtering device is provided comprising:
- a first GRIN lens and a second GRIN lens, the lenses having a substantially collimating end and a substantially focusing end;
- a first light transmitting spacer and a second light transmitting spacer between the substantially collimating ends of the first and second GRIN lenses, the spacers defining combining regions for light beams to combine;
- a beam splitting filter and a resonant optical cavity having a first and a second partially transmissive reflector being disposed between the first and second light transmitting spacers, said resonant optical cavity having a first port disposed at the a first partially transmissive reflector and a second port disposed at the second partially transmissive reflector.

Furthermore temperature sensors may be provided disposed about the first and second spacers for determining at least the relative temperature difference between the two light transmissive spacers.

The device may further comprise a heater or cooler disposed about at least one of the light transmissive spacers, for varying the phase between two optical signals entering the optical cavity or exiting the optical cavity.

Another aspect of the invention provides a method of filtering an input beam comprising multiplexed channels of light each occupying a predetermined wavelength band, at least one of the channels having a centre wavelength of λ_{c}, the method comprising the steps of:
providing the input beam to a resonant optical cavity having a first end face and a second end face spaced a distance apart of at least 5λ;
interfering a first output beam from the first end face of the resonant optical cavity;
with a second output beam from the second end face of the resonant optical cavity to produce one or more filtered output beams.

In embodiments of the invention, the method includes the steps of varying the phase relationship between the first output beam and the second output beam prior to combining the two captured beams.

In a particular embodiment the step of varying the phase relationship is performed so as to provide a phase offset of π at intervals of transmission spectral peaks between the first and second output beams to provide a de-interleaver filter.

In another aspect of the invention a method of providing a linearised intensity variation with wavelength comprises the steps of:
- providing the input beam to a resonant optical cavity;
- capturing a first output beam from a first end face of the resonant optical cavity;
- capturing a second output beam from a second end face of the resonant optical cavity; and,
- combining the two captured beams so that they interfere with one another to produce one or more filtered output beams.

In aspect of the invention there is provided a filtering device comprising:
- an optical resonator having a first and a second waveguide coupled thereto, one of the first and the second waveguides having an end for receiving an input signal to be filtered, the first and the second waveguide being optically coupled with the optical resonator at a first and second location respectively, for allowing light to couple into the resonator from one or more of the waveguides and or into one or more of the waveguides from the resonator;
- an optical coupler for coupling light within the two waveguides between said waveguides, the coupler being at a location along the waveguides such that output ends provide a filtering of said input light.

The optical resonator in a specific embodiment is a ring resonator.

In a particular embodiment the filtering device includes a first and second coupler at the first and second location for allowing the light to couple into the resonator from one or more of the waveguides and or into one or more of the waveguides from the resonator.

In an embodiment the first coupler ensures that the coupling ratio is at least 80:20 such that substantially more light is coupled by said coupler into the resonator than remains in the waveguides; and, the second coupler ensures that the coupling ratio is at least 20:80 such that substantially more light is coupled into the waveguides than remains in the resonator.

In particular embodiments the first coupler ensures that the coupling ratio is substantially about 17:83, such that substantially more light is coupled into the resonator than is coupled into the waveguides by said first and second couplers; and, the optical coupler for coupling light within the two waveguides between said waveguides at a location along the waveguides is a substantially 50:50 coupler.

The optical coupler can be an MMI coupler or a directional coupler.

The method of phase tuning the filtering device can comprise the step of irradiating at least one of the optical waveguides with light of a suitable intensity, wavelength and duration to effect a suitable refractive index change in said waveguide.

The method of phase tuning the filtering device can comprise the step of irradiating one of the first and second optical waveguides with light of a suitable intensity, wavelength and duration to effect a suitable refractive index change in said waveguide.

The waveguide that is irradiated can be first doped with a material that will effect a permanent refractive index change in the presence of light of a suitable intensity, wavelength and duration.

The method of tuning the filtering device which is an interleaver/de-interleaver filter, in an embodiment comprises the step of providing a suitable refractive index change over a length of one of the first and second waveguides so as to effect a required amount of tuning.

In an embodiment the optical path length from the first coupler to the optical coupler for coupling light within the two waveguides is substantially the same as the optical path length from the second coupler to the optical coupler for coupling light within the two waveguides.

In another aspect of the invention there is provided, a monolithic integrated filtering device comprising:
an optical resonator having a first and a second ports for allowing light to couple between the optical resonator and first and second waveguides; and,
means for combining light beams propagating within the first and second waveguides,
said means being optically coupled with the first and second waveguides so that they interfere to provide one or more output beams of light.

In a particular embodiment the optical resonator is a ring resonator.

In a particular embodiment the monolithic integrated filtering device is an interleaver/deinterleaver circuit.

In a particular embodiment the couplers and waveguides of the monolithic filtering device are disposed within a planar monolithic slab-like substrate.

There is further provided, an interleaver/de-interleaver circuit comprising:
- a first coupler having an input port and at least two output ports;
- a second coupler having two input ports and two output ports, the at least two output ports of the first coupler being optically coupled with the two input ports of the second coupler;
- an optical cavity having a partially reflective surface having a reflectivity E at one end and a reflective surface at another end with a higher reflectivity E', the optical cavity being optically coupled to one of the at least two output ports of the first coupler and at one of the two input ports of the second coupler.

In a particular embodiment of the interleaver/de-interleaver circuit the two couplers form a MZ interferometer.

In a particular embodiment one of the at least two output ports of the first coupler is coupled to one of the two input ports of the second coupler via a waveguide disposed between said two ports.

In a particular embodiment the first coupler and the second coupler are 50/50 couplers.

In a particular embodiment the circuit is a polarisation-wavelength interleaver for providing orthogonally polarised channels in a de-interleaving mode of operation and for providing in an interleaving mode of operation one of, a polarised stream of channels, and a stream of channels having each adjacent channels being orthogonally polarised.

In a particular embodiment a mirror is provided at or within at least one arm of the coupler to balance the polarisation dependent behaviour of the circuit.

In a particular embodiment the interleaver/de-interleaver circuit further comprises a collimator for launching collimated light toward the mirror and for focusing light received from the mirror.

In a particular embodiment the interleaver/de-interleaver circuit further comprises a third coupler coupled to one of the at least two output ports of the first coupler and one of the two input ports of the second coupler.

In a particular embodiment of the interleaver/de-interleaver circuit the third coupler is a 50/50 coupler.

In accordance with another aspect of the invention an interleaver/de-interleaver circuit comprises:
- a Mach-Zehnder interferometer having two optical branch paths between two 50/50 couplers, one of the two branch paths including an etalon within the path, such that light traversing said one branch path is coupled from one of the couplers to the other after resonating within the etalon, light traversing another of the two branch paths interfering with the light traversing the other branch path within one of the two couplers.

In accordance with another aspect of the invention an interleaver/de-interleaver circuit comprises:
- a coupling means having a first input port IN₁ and at least two output ports OUT₁ and OUT₂;
- the coupling means having two other input ports IN₂ and IN₃ and two other output ports OUT₃ and OUT₄, the at least two output ports OUT₁ and OUT₂ being optically coupled with the two input ports IN₂ and IN₃;
- an optical cavity having a partially reflective surface having a reflectivity E at one end and a reflective surface at another end with a higher reflectivity E', the optical cavity being optically coupled to one of the at least two output ports OUT₁ and OUT₂ and at one of the two input ports IN₂ and IN₃.

In a particular embodiment the coupling means is an at least 4x4 MMI coupler having a length 3 L_{π}/2.

In a particular embodiment the interleaver/de-interleaver circuit the coupling means comprises two MMI couplers.

In a particular embodiment the interleaver/de-interleaver further comprises a mirror coupled to two arms of the MMI coupler for lessening the polarisation dependence of the interleaver/de-interleaver and for providing a substantially polarisation insensitive interleaver/de-interleaver.

In a particular embodiment the interleaver/de-interleaver comprises a beam collimator for receiving light from one of the two arms and for providing a collimated beam to the mirror, said beam collimator for receiving reflected light from the mirror and for providing focused light to the other of the two arms.

In a particular embodiment the interleaver/de-interleaver comprises a light transmissive spacer between the beam collimator and the mirror for providing a required path length difference between two main paths of MMI coupler.

In a particular embodiment each of the two main paths comprise two arms, each arm directly coupled to one of said ports.

In aspect of invention an interleaver/de-interleaver comprises:
- a MZ-interferometer having an input/output port and two output/input ports;
- a GT resonator optically coupled with the MZ- interferometer, the GT resonator for providing additional filtering and for lessening the sinusoidal shape of de-interleaved channels.

In another aspect of the invention, there is provided, a method of providing light of orthogonally polarised adjacent channels, comprising the steps of:
- providing a stream of channelised light having a 45 degree linear polarisation with respect to a first plane, said 45 degree linear polarised light lying in a second plane normal to the first plane, the first plane containing lines extending from the two output/input ports of the device defined heretofore
- launching said light into one of the two input/output ports; and,
- receiving light from at least one of the output/input ports.

In another aspect of the invention there is provided, a method of manufacturing an interleaver/de-interleaver circuit comprising the steps of:
- providing a Mach-Zehnder interferometer having two optical waveguides between two 50/50 couplers;
- providing an etalon optically coupled with one of the two waveguides, such that light traversing said one waveguide is coupled from one of the couplers to the other after resonating within the etalon, light traversing another of the two waveguides interfering with the light traversing the other waveguide within one of the two couplers; and,
- phase tuning the circuit by irradiating at least one of the two waveguides with light of a suitable intensity, wavelength and duration to effect a suitable refractive index change in said waveguide.

A method of manufacturing an interleaver/de-interleaver circuit is provided comprising the steps of:
- providing a Mach-Zehnder interferometer having two optical waveguides between two 50/50 couplers;
- providing an etalon optically coupled with one of the two waveguides, such that light traversing said one waveguide is coupled from one of the couplers to the other after resonating within the etalon, light traversing another of the two waveguides interfering with the light traversing the other waveguide within one of the two couplers; and,
- phase tuning the circuit by irradiating at least one of the two waveguides with light of a suitable intensity, wavelength and duration to effect a suitable refractive index change in said waveguide.

In accordance with an aspect of the invention there is provided, a multiplexer/demultiplexer comprising:
- a beam splitter for splitting a beam into a first and a second sub-beam of light;
- a first GT resonator disposed to receive the first sub-beam of light;
- a second GT resonator disposed to receive the second sub-beam of light; and
- a beam combiner for combining light output from the first and second GT resonators.

In a particular embodiment the multiplexer/demultiplexer at least one of the GT resonators are comprised of a polymer that is sensitive to temperature for controllably varying a gap between two reflective surfaces of at least one of the first and second GT resonators.

The multiplexer/demultiplexer further comprises a control circuit for controlling the temperature about the polymer to controllably vary the gap of at least one of the first and second GT resonators.

The multiplexer/demultiplexer wherein the control circuit includes a heater for raising the temperature of the polymer.

In an embodiment of the invention, a multiplexer/demultiplexer comprises:
- a beam splitter/combiner for splitting a beam launched therein in from a first location into a first and a second sub-beam of light and for combining received sub-beams launched from other locations therein into a single beam of light;
- a first GT resonator disposed to receive the first sub-beam of light from the beam splitter/combiner; and
- a second GT resonator disposed to receive the second sub-beam of light from the beams splitter/combiner, the resonators providing a feedback signal in response to receiving the first and second sub-beams of light, respectively, to the beam splitter/combiner.

The multiplexer/demultiplexer, wherein at least one of the GT resonators comprise a material having a path length change with temperature to provide a tunable hybrid thermo-optically Fabry-Perôt filter.
- In a different aspect of the invention, there is provided, a method of de-multiplexing an optical signal into or de-interleaved light channels, comprising the steps of:
- splitting a beam of light comprising a plurality of light channels launched therein in from a first location into a first and a second sub-beam of light in a wavelength and polarisation independent manner,
- providing the first sub-beam to a first GT resonator disposed to receive the first sub-beam of light;
- providing the second beam of light to a second GT resonator disposed to receive the second sub-beam of light,
- receiving a first output signal from the first GT resonator; and,
- receiving a second output signal from the second GT resonator, wherein the first and second output signals are de-interleaved light channels .

The method may further comprise the step of thermo-optically tuning at least one of the GT resonators.

The method may further comprise the step of tuning at least one of the GT resonators to change its free-spectral-range.

In a particular embodiment, the step of tuning includes the step of varying the response of at least one of the etalons to provide asymmetric channels.

In a particular embodiment, the step of tuning includes the step of varying the response of at least one of the etalons to provide symmetric channels.

### Brief Description of the Drawings

Exemplary embodiments of the invention will now be described in conjunction with the drawings in which:
Fig. 1 is a circuit block diagram of a prior art Michelson-Gires-Tournois interferometer;
Fig. 1a is logarithmic graph plotting phase versus wavelength for a two output Michelson-Gires-Tournois interferometer;
Fig. 1b is a graph of a simulated output response of a Michelson-Gires-Tournois interferometer;
Fig. 2 is a circuit block diagram of a single etalon interferometric structure in accordance with the invention;
Fig. 2a is a graph plotting phase versus wavelength for a two output etalon in accordance with this invention;
Fig. 3 is a more detailed diagram of the etalon shown in Fig. 2 in accordance with the invention;
Fig. 4a is a circuit block diagram of an alternative embodiment of the structure shown in Fig. 2, wherein two light transmissive blocks are utilised as combining regions;
Fig. 4b is a circuit block diagram similar to the one shown in Fig. 4a, wherein the circuit is operated in a reverse mode of operation;
Fig. 4c is a similar circuit block diagram to Figs 4a and 4b, wherein a fourth port is added;
Fig. 5 is a detailed block diagram depicting a preferred embodiment similar to the one shown in Figs 4a to 4c;
Fig. 6a is a graph of an output response of phase versus wavelength for a multi-cavity etalon shown in Fig. 6c;
Fig. 6b is a graph depicting the output response of a single cavity etalon and of a multiple cavity etalon;
Fig. 6c is a circuit diagram of an alternative embodiment of the invention wherein a multi-cavity etalon is used;
Fig. 7 is a graph depicting a linearised intensity output response of an alternative embodiment of the invention;
Fig. 8 is a graph depicting a an output response of an alternative embodiment of the invention where the reflectivities and phase are selected such that a band pass filter is provided;
Fig. 9 is a circuit diagram of an alternative embodiment of the invention wherein planar waveguide technology is utilised;
Fig. 10 is a more detailed schematic diagram of an MMI coupler used in the circuit of Fig. 9 wherein the operation is of the coupler is described in accordance with this figure;
Fig. 11 is a circuit diagram of an alternative embodiment of the invention to that shown in Fig. 9, wherein two etalons are created by providing regions within the planar waveguide having a different refractive index than in an adjacent region;
Fig. 12 is a block circuit diagram of ring resonator used and is a functional equivalent to the Fabry-Perôt resonator shown in previous embodiments;
Fig. 13 is a block circuit diagram of yet an alternative embodiment of the invention wherein ring resonator is utilised;
Figs. 14 is a graph of transmission versus relative wavelength showing spectral amplitude response of the two outputs aᵣ and aₜ of the ring resonator, and Fig. 15 is a graph of the spectral phase response of the two outputs of the ring resonator respectively;
Fig. 16 is a graph of phase difference versus relative wavelength between the two outputs aᵣ and aₜ of the ring resonator showing the phase difference alternating between -π/2 and +π/2 over consecutive wavelength channels equivalent of the FSR of the ring resonator;
Fig. 17 is a graph of transmission versus relative wavelength depicting the spectral transmissions of the two interleaved signals aₒᵤₜ₁ and aₒᵤₜ₂ at respective outputs of the coupler interferometer;
Fig. 18 is a circuit diagram of the basic circuit shown in Fig. 11 wherein a region of the waveguide between the first coupler and the third coupler is doped to become more light sensitive to effect a controlled refractive index change by being irradiated by a light source;
Fig. 19 is a circuit diagram of a circuit shown in accordance with an embodiment of the invention for providing a de-interleaver/interleaver function;
Fig. 20a is a circuit diagram of a portion of the circuit shown in Fig. 19; and, Figs. 20b and 20c are circuit diagrams of portion of the circuit shown in Fig. 19.
Fig. 21 is a schematic diagram of a prior art wide-band guided-wave periodic multi/demultiplexer with a ring resonator for optical FDM transmission systems;
Fig. 22 is a schematic diagram of an embodiment of a WDM interleaver/de-interleaver circuit based on a waveguide MZ-interferometer combined with a GT resonator in accordance with the invention.
Fig. 23 is a schematic diagram of a 3 dB MMI coupler illustrating diagrammatically the functionality of the device;
Fig. 24 is a schematic diagram of an alternative embodiment of a WDM interleaver/deinterleaver circuit based on a waveguide MZ-interferometer combined with a GT resonator in accordance with the invention similar to that shown in Fig. 22 however having a resonator made by employing two materials having different refractive indices in the waveguides;
Fig. 25 is a schematic diagram of an alternative embodiment of a WDM interleaver/deinterleaver circuit based on a waveguide MZ-interferometer combined with a GT resonator in accordance with the invention wherein a micro-optic GT resonator is provided;
Fig. 26 is a schematic diagram of an alternative embodiment of a WDM interleaver/deinterleaver circuit based on a waveguide MZ-interferometer combined with a GT resonator in accordance with the invention having a mirror added to the upper arm of the MZ to balance the polarisation-dependent behaviour of the device;
Fig. 27 is a schematic diagram of an embodiment of the invention showing a folded version of the device of Fig. 26; a spacer is introduced into the upper mirror to account for length difference between the two arms;
Fig. 28 is a device similar to that of Fig. 27 wherein the two 50/50 couplers have been replaced with a 4x4 MMI coupler of length 3L_{π}/2;
Fig. 29 is a graph of the optical fields of the MZ-resonator interferometer after the second 3dB coupler.
Fig. 30 is a graph depicting the difference between the optical fields of the MZ-resonator interferometer after the second 3dB coupler.
Figs. 31a and 31b are graphs of spectral transmissions of the two de-interleaved signals aₐₒᵤₜ₁ and aₐₒᵤₜ₂ at the outputs of the MZ-resonator interferometer;
Figs. 32a and 32b are graphs of the spectral transmissions of the two de-interleaved signals aₐₒᵤₜ₁ and aₐₒᵤₜ₂ at the outputs of the MZ-resonator interferometer;
Fig. 33 is a schematic diagram of a WDM interleaver that can be designed to be either symmetric or asymmetric;
Fig. 34 is a graph of phase difference between the two optical fields of the interleaver 33 after the second 3dB coupler;
Fig. 35 is a graph of transmission versus optical frequency showing the spectral transmissions of the two de-interleaved signals at the output of the device of Fig. 33, wherein the device is designed to be symmetric;
Fig. 36 is a graph of phase difference versus optical frequency depicting the phase difference between the two optical field of the interleaver in Fig. 33 after the second 3dB coupler, wherein the device is designed to be asymmetric;
Fig. 37 is a graph of transmission versus optical frequency depicting the spectral transmissions of the two de-interleaved signals at the output of the device of Fig. 33, wherein the device is designed to be asymmetric;
Fig38a is an alternative embodiment of the invention wherein only one GT resonator is used; and,
Fig. 38b is a detailed view of a portion of the circuit shown in Fig. 38a.
Fig. 39 is a circuit block diagram of a 2-port GT interleaver/de-interleaver circuit in accordance with this invention;
Fig. 40 is an alternative embodiment of a 3-port GT interleaver/de-interleaver circuit in accordance with this invention;
Fig. 41. illustrates an alternative embodiment of the invention is shown in wherein a beam splitting cube is made up of two portions, a first being of a refractive index n1 and a second being of a refractive index n2 wherein, the physical lengths of the two halves are equal, however the optical path lengths are slightly different as required.
Figs. 42 and 43 illustrate another feature of polymer materials. Their path length change with temperature change is quite significant. In fact this property can be used in combination with glass or silica to fabricate hybrid thermo-optically tunable Fabry-Perôt tunable filters.
Fig. 44 is a diagram of a thermo-optic Fabry-Perôt tunable filter in accordance with an aspect of this invention;
Fig.45 is a diagram of a an alternative embodiment of a thermo-optic Fabry-Perôt tunable filter in accordance with an aspect of this invention;
Fig. 46 is a diagram of a an alternative embodiment of a thermo-optic Fabry-Perôt tunable filter in accordance with an aspect of this invention; and,
Fig. 47 is a diagram of an alternative more compact embodiment of the invention.

### Detailed Description

In general, the spectral characteristics of an etalon filter are determined by the reflectivity and gap spacing of the mirrors or reflective surfaces. The Fabry-Perôt principle allows a wideband optical beam to be filtered whereby only periodic spectral passbands are substantially transmitted out of the filter. Conversely, if the reflectivity of the mirrors or reflective surfaces are selected appropriately, periodic spectral passbands shifted by d nanometres are substantially reflected backwards from the input mirror surface. In adjustable Fabry-Perôt devices, such as one disclosed in United States Patent number 5,283,845 in the name of Ip, assigned to JDS Fitel Inc (name changed to JDS Uniphase Inc.), tuning of the centre wavelength of the spectral passband is achieved typically by varying the effective cavity length (spacing).

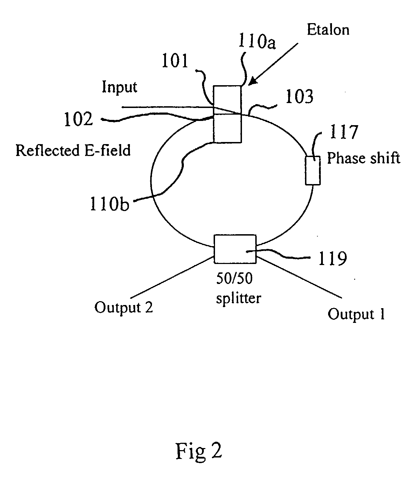

Referring now to Fig. 2, an optical circuit is shown for demultiplexing a channelled optical signal, that is, a signal comprising multiplexed closely spaced channels, into a plurality of less-dense channelled signals each comprising a plurality of multiplexed less closely spaced channels. Operating the circuit in a first direction wherein the circuit performs a multiplexing function on a plurality of channels launched into an end of the circuit, it is an interleaver circuit, and in an opposite direction wherein the circuit performs a demultiplexing function on a composite signal launched therein at an opposite end to provide a plurality of demultiplexed channels it serves as a de-interleaver circuit.

However, the term interleaver circuit shall be used hereafter to denote this interleaver/deinterleaver circuit. One such interleaver circuit is disclosed as a comb splitting filter in U.S. Patent No. 5,680,490 in the name of Cohen.

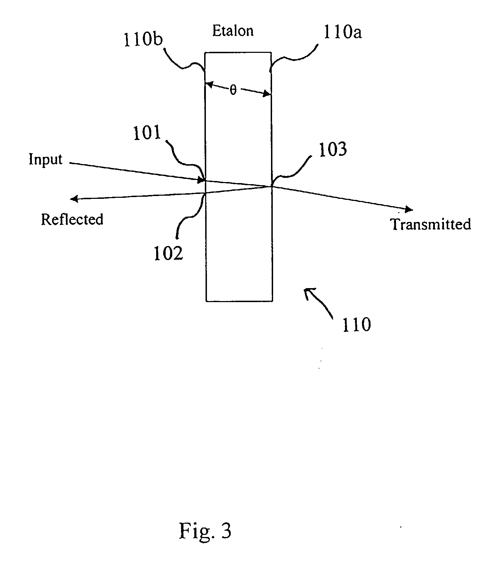

In Fig. 2, the optical interleaver circuit includes a 3-port optical cavity in the form of a Fabry-Perôt etalon filter 110 (shown in more detail in Fig. 3) having a first partially reflective end face 110a and a second partially reflective end face 110b. The Fabry-Perôt etalon has an input port 101 at end face 110b, a second port 102 at the Fabry-Perôt etalon filter reflection end face 110, and a third port 103 coupled to a transmission end face 110a serving as an output port. The Fabry-Perôt etalon filter 110 has two partially reflective mirrors, or surfaces, facing each other and separated by a certain fixed gap which forms a cavity. For the etalon filter 110, for a transmission resonance θ is a multiple of π, and the round trip phase is a multiple of 2π.

A phase shifter for controllably delaying an optical signal passing therethrough is optically coupled with the third port 103 at an end of the Fabry-Perôt etalon 110. A 50/50 splitter 119 is disposed between and optically coupled with an output end of the phase shifter 117 and the second port 102 of the Fabry-Perôt etalon 110. Although shown schematically as having waveguides, for example, optical fibres for directing signals from the etalon to the phase shifter 117 and splitter 119, less preferable free space implementations using mirrors or reflectors are within the capability of one skilled in the art. Of course coupling lenses (not shown) such as GRIN lenses are preferred for coupling light from and or to optical fibres from particular components.

The inventor has recently noticed that a phase difference between the reflected and transmitted E-field phase from an etalon, for example, the etalon 110, remains constant under certain circumstances. Furthermore, when input light is launched into the input port 101 of the etalon, the phase difference between the a resulting signal exiting the end face 103 and a resulting signal exiting the end face 102 is either 0 or π radians, and changes on every spectral transmission resonance. This is illustrated in Fig. 2a, where phase is plotted versus wavelength. The locking of the phase difference between transmitted and reflected E-fields occurs due to multiple interference effects within the etalon.

This invention utilises this feature by interfering the two resulting signals, by way of example, so that a flat spectral passband filter can be realised. By adjusting the phase relationship between the two signals exiting opposing faces of the Fabry-Perôt etalon 110, and subsequently interfering these signals, various desired output responses can be realised. Of course, optionally, additional control can be added to either attenuate or amplify one of or both of the two signals. Since the path length difference between the optical fibres between port 2 of the etalon 110 and the 50/50 splitter 119 and between port 3 of the etalon 110 and the 50/50 splitter will likely be other than zero or some exact multiple of the free spectral range of the etalon, provision of the phase shifter 117 ensures a means of adjusting for unwanted or desired phase differences due to path length differences.

If no inherent phase difference is created between the two arms of the interferometer, that is, between the paths between the etalon 110 and the splitter 119, the following outputs will be obtained.
**Output from port 3**: E_{R}e^{jθR}+E_{T}e^{j(θT-π/2)}
**Output from port 2**: E_{T}e^{jθT}+E_{R}e^{j(θR-π/2)}

Where θR and θT are the reflected and transmitted phases created by the etalon. The interferometric output will be given by the general expression:${\text{I}}_{\text{Res}} {\text{= 1/2(E}}_{\text{R}} {}^{\text{2}} {\text{+E}}_{\text{T}} {}^{\text{2}} {\text{+2E}}_{\text{R}} {\text{E}}_{\text{T}} \text{cos(Δθ))}$

Where Δθ represents a phase difference between the two E-fields. If θR=θT then the phase difference for both outputs will be π/2. Also if θR-θT=π then again the phase difference for both the outputs would be π/2. Thus, the interferometric action that is desired does not exist.

However, a π/2 phase difference is provided in the interferometric arms then the two outputs would be given by:
**Output from port 3**: E_{R}e^{jθR}+E_{T}e^{j(θT)}
**Output from port 2**: E_{T}e^{j(θT+π/2)}+E_{R}e^{j(θR-π/2)}

As can be seen from above the outputs from the interferometer now have a π phase shift, which indicates that useful or a desired interferometric action between the two signals can exist. The phase difference for the output at port 3 and the output at port 2 would be θR-θT and θR-θT-π respectively. If θR=θT then the phase difference for output the output at port 3 and 2 would be 0 and π respectively. For θR-θT=π then output at port 3 and 2 would have a phase difference of π and 0 respectively. Thus channel selection can be realised.

The circuit can operate as a de-interleaver filter, providing the separation of odd channels at one output of the splitter and even channels at a second output of the splitter.

By changing the phase relationship between the signals in the two arms of the circuit, being fed to the splitter, and by changing the reflectivities of the end faces of the etalon, for example to have 60% and 1% reflectivities, the interleaving function disappears and the circuit operates to provide a linearised output. Such a linearised output signal is useful in such applications as wavelength locking, where a linear ramped signal is desired. Furthermore, if the two output signals are subtracted from one another, the effect is further enhanced since no loss of the signal will be induced.

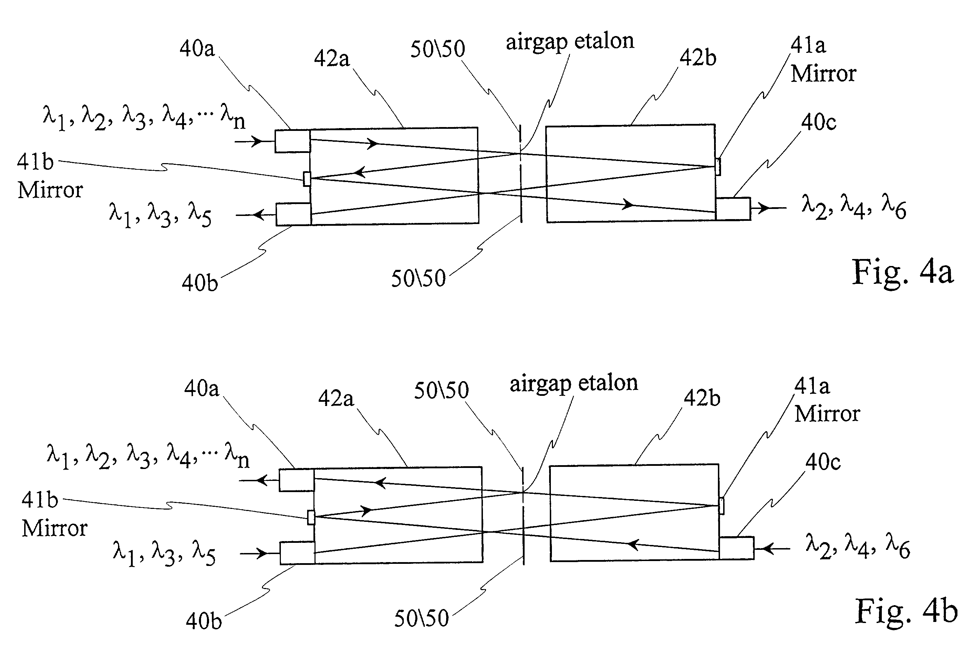

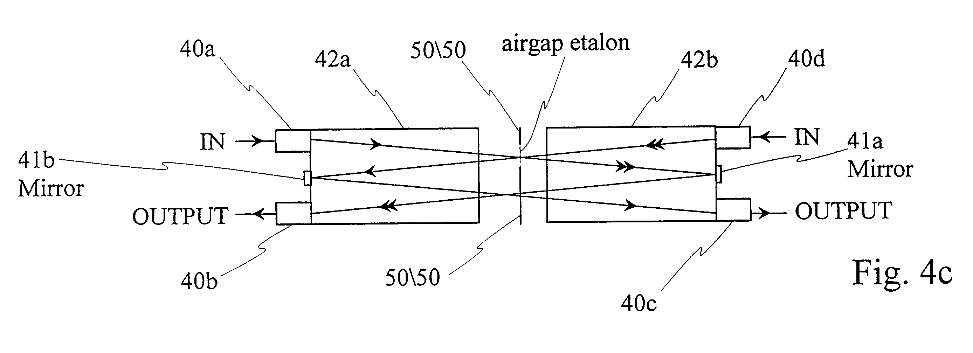

Turning now to Figs, 4a through 4c, an optical device is shown in accordance with the invention embodying a free-space device wherein unguided collimated light propagates within the device. The interleaver/de-interleaver shown has two glass interferometric end plates 42a and 42b (referred hereafter as endplates 42) having a spacer disposed therebetween. The spacer region between the two interferometric end plates 42 has a 50/50 coating (shown) except for where a dotted line is shown. This dotted line represents the region between the plates 42 where the etalon is formed (not shown in detail) of two at least partially reflecting surfaces having an air gap there between having a predetermined dimension of >5λ defining the free spectral range of the etalon. Graded index (GRIN) lenses 40a, through 40c in Figs. 4a and 4b serve to provide collimated light through and between the end plates 42, and serve as focusing lenses at output ports. Mirrors 41a and 41b, are disposed at ends of the plates 42 to direct the beam toward a particular port. For example, light launched into an input port at lens 40a is directed at the etalon between the plates. About 50% of the light is transmitted through the front end of the etalon and follows a path wherein the light is incident upon the mirror 41a and it is subsequently directed to the lens 41b; the remaining light is transmitted through the back side of the etalon and impinges upon the mirror 41b where it is subsequently directed to the port at lens 40c. As shown, when channels having centre wavelengths λ1, λ2, λ3, λ4, .....λn are launched into the port at lens 40a, the channels are de-interleaved at the ports at lenses 40b and 40c into channel groups λ1,λ3,λ5 and λ2, λ4, λ6... respectively; thereby providing two de-interleaved groups. Fig. 4b illustrates how the same circuit of Fig. 4a can be used backwards to interleave de-interleaved channels. Furthermore, Fig. 4c illustrates that an extra input port at GRIN lens 40d can be added and the circuit can be used to switch input channels to either output port by appropriately adjusting and controlling the phase.

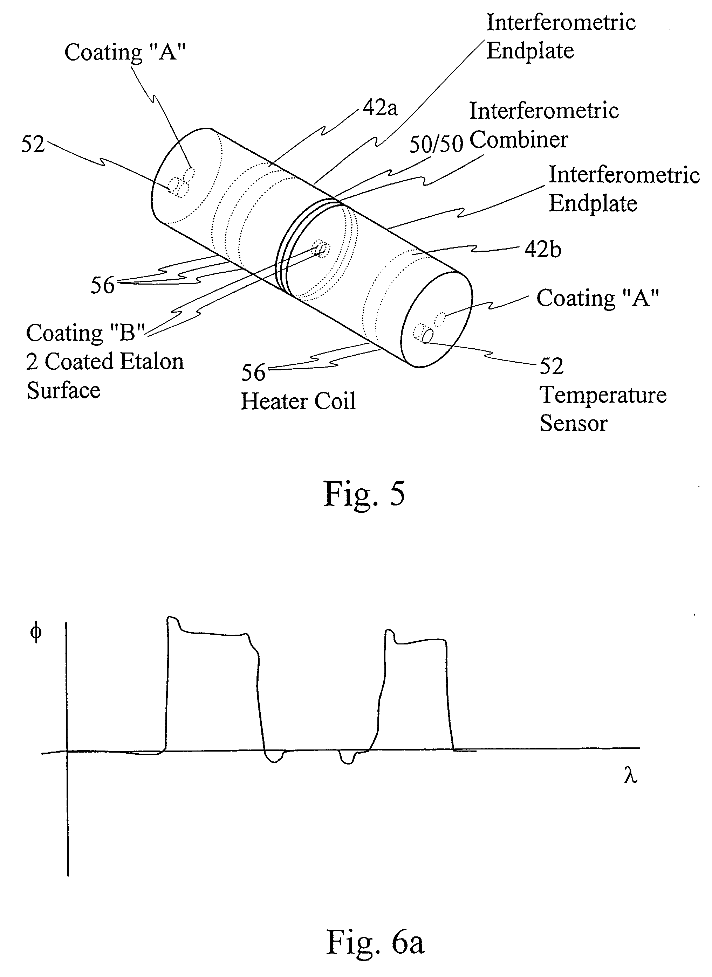

Referring now to Fig. 5, an optical device is shown in accordance with the invention embodying a free-space device wherein unguided collimated light propagates within the device. The interleaver/de-interleaver shown has two glass interferometric end plates 42 having a spacer disposed therebetween. The end plates and the spacer are joined by optical contacting. These contacting surfaces are polished simultaneously and in the same orientation in order to keep their surfaces parallel within 10 arc seconds when assembled. The axis of the through hole of the interferometric combiner and the axis of the coating B on each of the interferometric endplates are concentric within 0.1 mm. The interferometric combiner is conveniently embodied by a 50/50 coating. The etalon is absent this coating. The collimating/focusing GRIN lenses shown in Fig. 4 are not shown in Fig. 5, for clarity. Temperature sensors 52 are shown at ends of the plates 52 to determine the relative temperature difference between the two interferometric end plates 42. Heaters 42a and 42b which are conveniently wrapped around the end plates 42 are used with the temperature sensors 52 to control the phase relationship between the transmitted and reflected optical signals passing through opposite ends of the etalon.

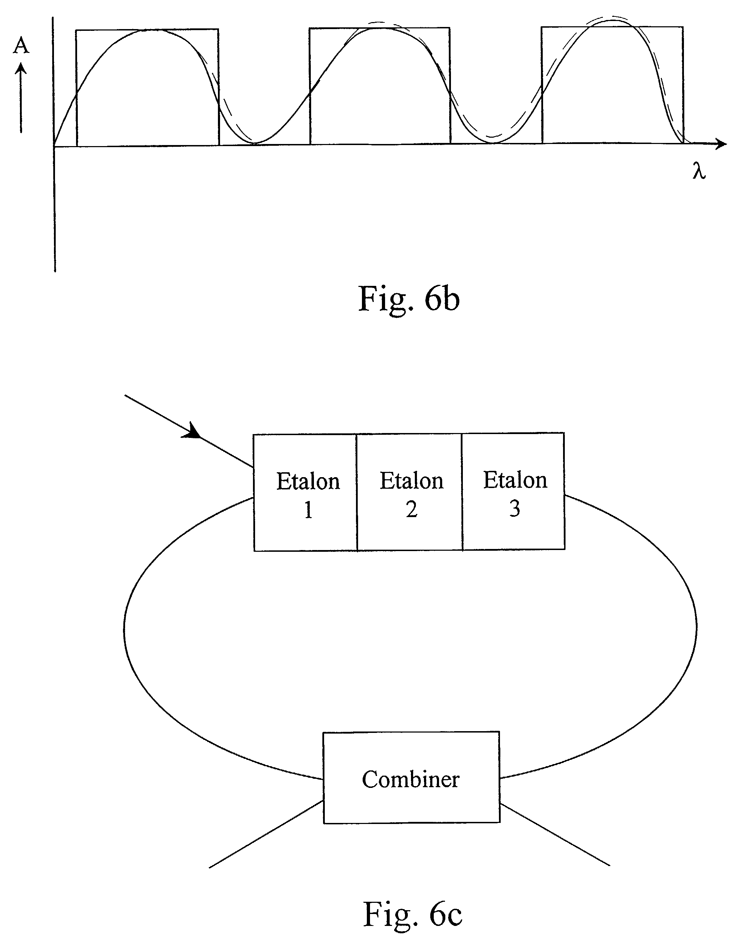

Another embodiment of the invention is shown in Fig. 6, where an odd-integer number multi-cavity etalon is shown used in a same manner as was the single etalon described heretofore. Thus light is captured and combined from outermost opposite ports of the multi-cavity etalon structure in accordance with the teaching of this invention. By using multi-cavities, i.e. three etalons, the profile shown if Fig. 6a is acquired wherein there is an increase in the phase at certain portions 62 of the graph which result in a steeper sharper output response. Furthermore, by providing more etalon surfaces, i.e. at least four reflective surfaces in the instance of a three cavity etalon, more control is afforded by being able to change the reflectivities of each surface. Fig. 6b illustrates two plots, one in dotted outline, which represents a portion of an output spectrum for a single cavity etalon and a solid line which represents the same portion of the output spectrum for a three cavity etalon device, in accordance with the invention. Fig. 6c illustrates the circuit in accordance with this invention having a multi-cavity etalon coupled to a combiner.

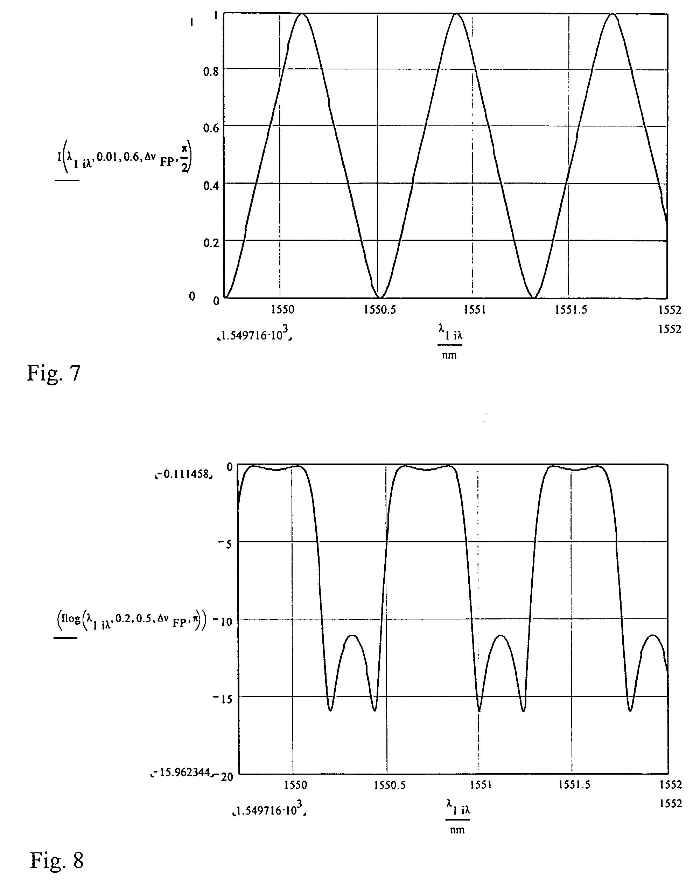

In previous embodiments of the invention the phase shifter has ensured an effective phase difference of π/2, so that the phase shift incurred through the 50/50 splitter has been compensated. This, then, has allowed complete constructive and destructive interference to occur in the interferometer outputs. However, if a different phase difference is used, then with a certain combination of reflectivities for the two facets of the etalon, a linearised intensity variation with wavelength as shown in the graph of Fig. 7 can be achieved. In this example, the reflection coefficients are 0.01 and 0.6 and the phase difference is 0.

Fig. 8 illustrates and alternative embodiment whereby a flat-filter pass-band is provided by using the correct phase difference and reflectivities.

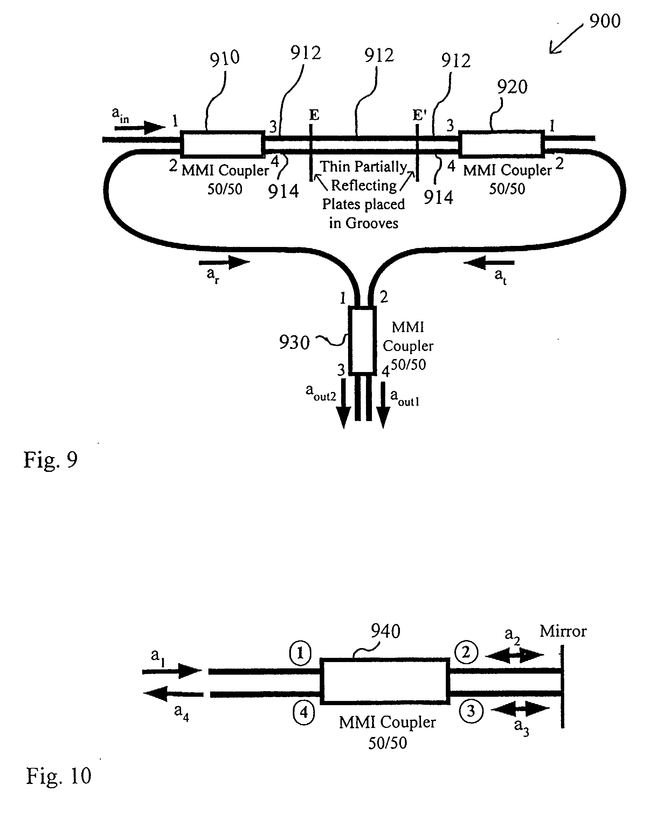

Turning now to Fig. 9 an alternative embodiment of the invention is provided which functionally similar to the embodiment shown in Fig. 2. An interleaver circuit 900 is shown that can be conveniently made using planar waveguide technology. Here the waveguides can, for example, be disposed in glass. The waveguide regions can be doped, ion implanted, or grafted. For example the core light guide regions can be a light transmissive polymer. A first MMI 50/50 coupler 910 having an input port 1 and an output port 2 at a first end is optically coupled to a second, same MMI 50/50 coupler 920 by way of waveguides 912 and 914 disposed therebetween. Two thin partially reflecting plates E and E' are disposed in grooves cut into the waveguides 912 and 914. Plate E, waveguide 912 disposed therebetween, and Plate E' form a first Fabry-Perôt etalon. Similarly, plate E, waveguide 914 disposed therebetween, and Plate E' form a second Fabry-Perôt etalon. An output port 2 of the first MMI coupler 910 and an output port 2 of the second MMI coupler 920 are coupled to input ports 1 and 2 of a third MMI 50/50 coupler 930 having output ports 3 and 4 for carrying signals aₒᵤₜ₁ and aₒᵤₜ₂ respectively.

Prior to describing the operation of the interleaver/de-interleaver circuit 900 Fig. 10 is used as a means of describing the functionality of a four-port 3 dB coupler, similar to the ones shown in Fig. 9. An input signal a₁ provided to port 1 of the coupler 940 is divided equally between ports 2 and 3. After the signals are reflected backward by the mirror, shown, they are combined into port 4 of the coupler not port 1. In this manner, the reflected signal is separated from the input signal without the requirement of an optical circulator. Of course the MMI couplers shown in Fig. 9 could be replaced with 3 dB couplers.

The operation of the circuit of Fig. 9 is similar to the operation of the deinterleaver/interleaver shown in Fig. 2. In Fig. 9 an input signal aᵢₙ is launched into port 1 and is divided equally into two de-interleaved signals on waveguides 912 and 914 at ports 3 and 4 respectively of the coupler 910. The transmission signal aₜ and reflection signal aᵣ transmitted through and reflected from the etalon between the couplers 910 and 920 are input into port 1 and 2 of the MMI coupler 930 and are provided as two de-interleaved output signals. Of course, each de-interleaved output stream can be provided to yet another similar de-interleaving circuit for further de-interleaving the channellised signals. For example, at a first stage such as the one described in reference to Fig. 9, channels 1, 3, 5, 7, ... are output on aₒᵤₜ₁ and channels 2, 4, 6, 8, ... are output on aₒᵤₜ₁. Notwithstanding, channels 1, 3, 5, 7, 9, can be fed to a similar circuit to circuit 900 wherein the etalon has a greater FSR so that two other data streams 1, 5, 9 and, 3, 7, 11 can further be demultiplexed.

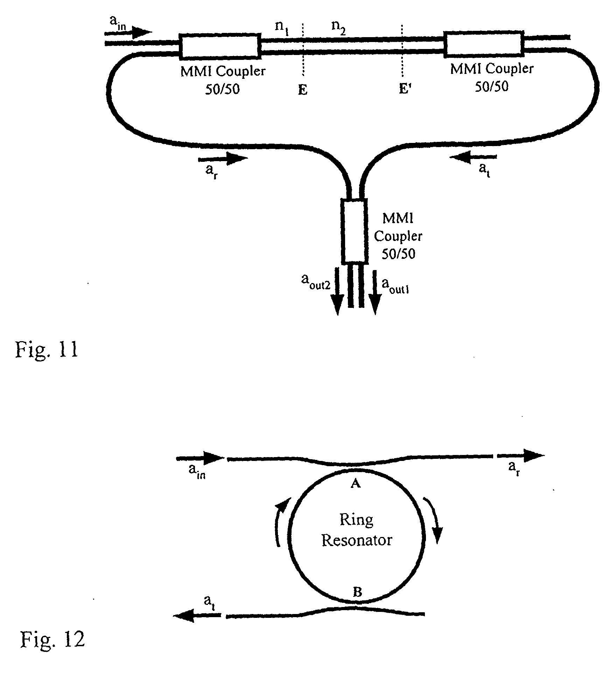

Another similar embodiment to that of Fig. 9 is shown in Fig. 11 wherein an etalon 111 is formed between the two MMI couplers 910 and 920 by way of providing a region in each waveguide 912 and 914 wherein the refractive index is different from the refractive index of the waveguides coupled to and adjacent to this region. The etalon region can be a polymer having a suitable refractive index. Of course the length of the etalon, and refractive index difference between the etalon region and adjacent regions must be sufficient such as to provide a desired reflectivity at the interface between different index regions.

Fig. 12 depicts a functionally similar embodiment to a Fabry-Perôt etalon. The circuit shown in Fig. 12 utilises a ring resonator. An equivalent transfer function of a Fabry-Perôt resonator can be obtained by combining a waveguide ring resonator and two directional couplers as is shown. This is a 3-port device with one input port and two output ports. The signals aᵣ and aₜ at the output ports of the device are equivalent to the reflected and transmitted signals of a Fabry-Perôt resonator. The coupling coefficients of the directional couplers control the finesse of the cavity. The periodic spectral response is determined by the total length of the ring through the following equation:$\text{FSR=c/ΔL}$ where c is the speed of light and ΔL is the optical length through the ring.

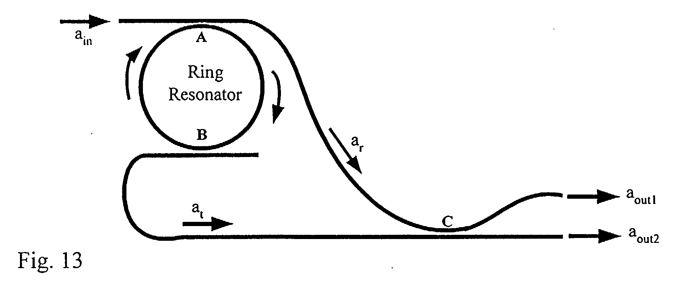

An embodiment in accordance with this invention is shown in Fig. 13. The two outputs of the ring resonator are routed to a 3 dB coupler to obtain two interleaved signals, aₒᵤₜ₁ and aₒᵤₜ₂.. An interleaving function can be realised if the optical length AC is equal to the optical length BC, wherein the optical length is the physical length x the refractive index. Of course the physical length is somewhat restricted by the amount of bending that can be tolerated. In a preferred embodiment, for interleaving, the coupler is a 50/50 coupler. The coupler at C can be a directional coupler or an MMI coupler. In a preferred embodiment the couplers at A and B are 17.1% / 82:9% couplers, such that 82.9% of the light is coupled into the ring, and 17.1% of the light passes through the waveguides adjacent the ring.

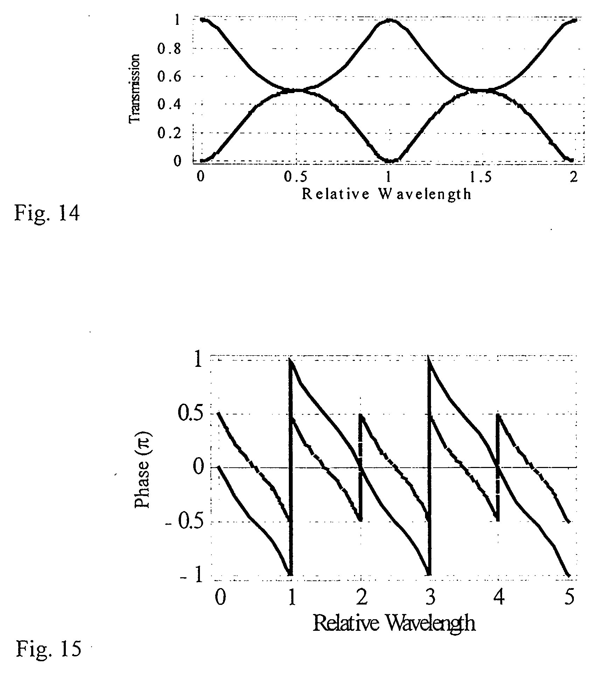

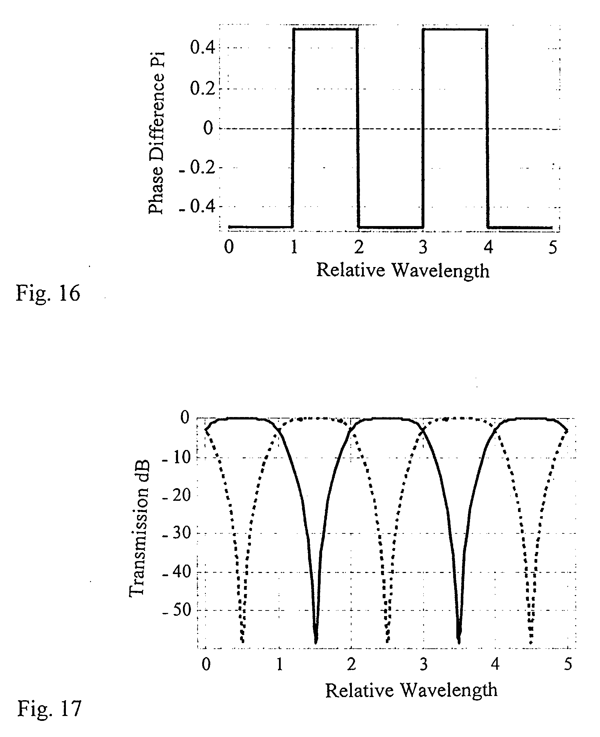

Figs. 14 and 15 show the spectral amplitude and the phase responses of the two outputs, aᵣ and aₜ, of the ring resonator. Figure 16 shows the phase difference between the two outputs, aᵣ and aₜ, of the ring resonator. The phase difference alternates between -π/2 and +π/2 over consecutive wavelength channels equivalent to the FSR of the ring resonator. Finally, Figure 17 shows the spectral transmissions of the two de-interleaved signals, aₒᵤₜ₁ and aₒᵤₜ₂, at the outputs of the waveguide coupler interferometer

Of course numerous other embodiments may be envisaged, without departing from the spirit and scope of the invention. For example, the etalon or multi-cavity etalon can be a tunable etalon.

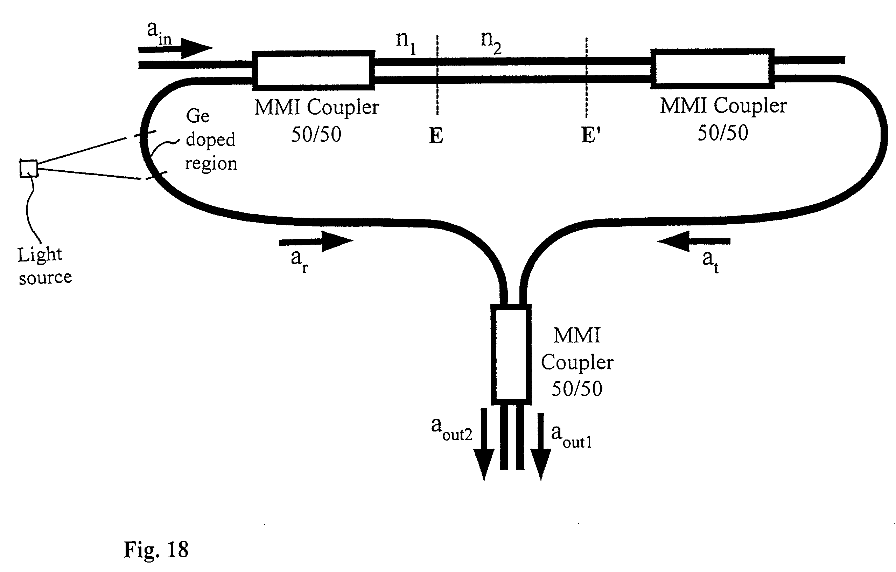

Furthermore, the monolithic waveguide devices described in accordance with this invention, more particularly the embodiments shown in Figs. 9, 11, and 13 can be fabricated in such a way as to make them relatively temperature stable by permanently tuning the device. In any of these embodiments one of the arms, aᵣ or aₜ can be doped, for example with germanium and subsequently exposed to UV light, in order to vary the refractive index of a particular section of the doped arm. Alternatively, exposing one arm to light of a suitable intensity and duration can in some instances yield a required refractive index change to permanently tune the device. This is a convenient method shown in Fig. 18 of permanently adjusting the phase relationship between the two arms aᵣ and aₜ thereby yielding very temperature tolerant devices.

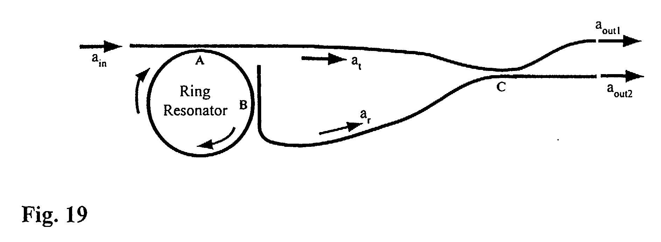

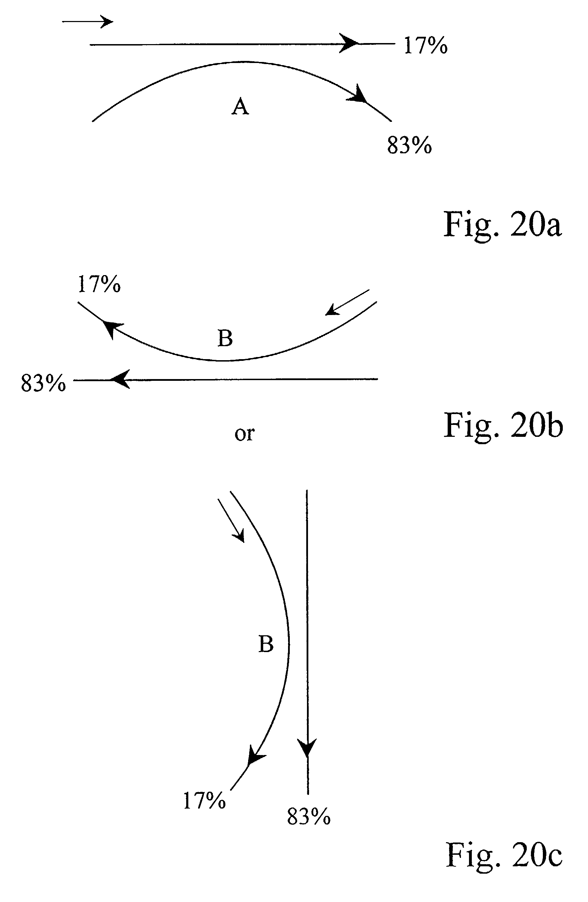

An alternative embodiment of the invention is shown in Fig. 19 wherein a deinterleaver/interleaver is shown. In this instance the locations A and B are shown to be 90 degrees apart. The relationship between the locations A, B, and C are as follows: AB + BC -AC = L_{ring}/2, where L_{ring} is the length of the ring resonator. Figs. 20a, 20b, and 20c illustrate approximate power coupling ratios in couplers A, B, and C.

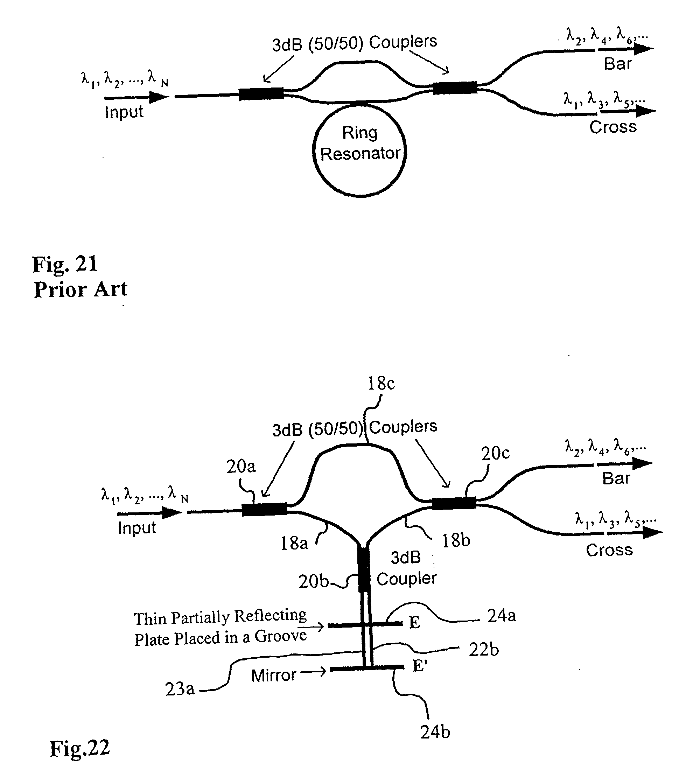

The prior art circuit of Fig. 21 has an improved response over the use of a known asymmetric Mach-Zehnder interferometer filter, which is sinusoidal in output response. Notwithstanding, it is difficult to implement a low loss ring resonator with 100 GHz or 50 GHz FSR. Another advantage of the MZ interferometer of Fig. 21 is that it obviates the use of circulator, required in a typical bulk optics Michelson interferometer combined with a GT device.

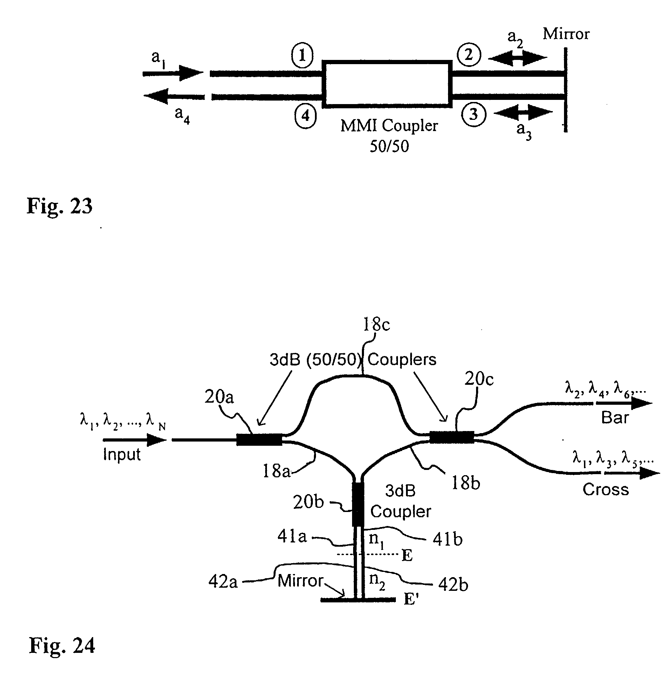

An embodiment of this invention is shown in Fig. 22 implemented using waveguide technology based on and MZ interferometer combined with a GT resonator. The length of the arms 18a and 18b in combination are of a different length than the arm 18c. A 4-port 3dB coupler 20b is disposed between arms 18a and 18b optically connecting ports of two 3dB couplers 20a and 20c. At an end of the 3dB coupler 20b is GT resonator, which is formed by providing a mirror 24b at one end of two waveguides 22a and 22b and by disposing a partially reflecting plate 24a within a groove across the waveguides 22a and 22b. The mirror has a reflectivity E' and the partially reflecting plate 24a has a reflectivity E < E'. Preferably, the mirror 24b is 100% reflective. The couplers 20a and 20c are both 3dB couplers. Fig. 23 shows in more detail the functionality of an MMI 3dB coupler such as 20b having a mirror at ports 2 and 3. It becomes clear after understanding the operation of the 3dB coupler with a mirror that an optical circulator heretofore required in a Michelson GT resonating device, is not required. The input signal al launched into port 1 is divided equally between ports 2 and 3. When signals a₂ and a3 are reflected back by the mirror, they are combined into port 4 of the coupler and not port 1. This is due to phase relations in the 3dB coupler. In this manner the reflected signal from the mirror is separated from the input signal without use of an optical circulator.

The operation of the Mach-Zhender Gires Tournois (MZGT) circuit of Fig. 22, 24, and 25 is similar. These devices are polarisation interleavers. Only one of vertical or horizontal polarised light of wavelength λ1, λ2, .....λN is launched into input port 1 of the coupler 20a. If only vertically or only horizontally polarised light is launched into the device at the output of the device wavelengths/channels are de-interleaved; channels corresponding to wavelengths λ2, λ4, λ6.... are directed to one output port of the coupler 20c and channels corresponding to wavelengths λ1, λ3, λ5....are directed to the other output port of the coupler 20c.

If the input light is not horizontally or vertically polarised, the device will not function as a wavelength de-interleaver. Hence this device is useful in transmission schemes that rely on wavelength polarisation interleaving. Although the circuit is shown for performing polarisation interleaving, it can be used in an opposite direction to de-interleave channels as well. If light launched into the device is, for example polarised at 45 degrees, the output arms would both provide adjacent channels having λ1, λ2, λ3, λ4...λN wherein adjacent channels corresponding to these wavelengths would be orthogonally polarised, wherein the outputs would have inverse polarisations on each port for same channels.

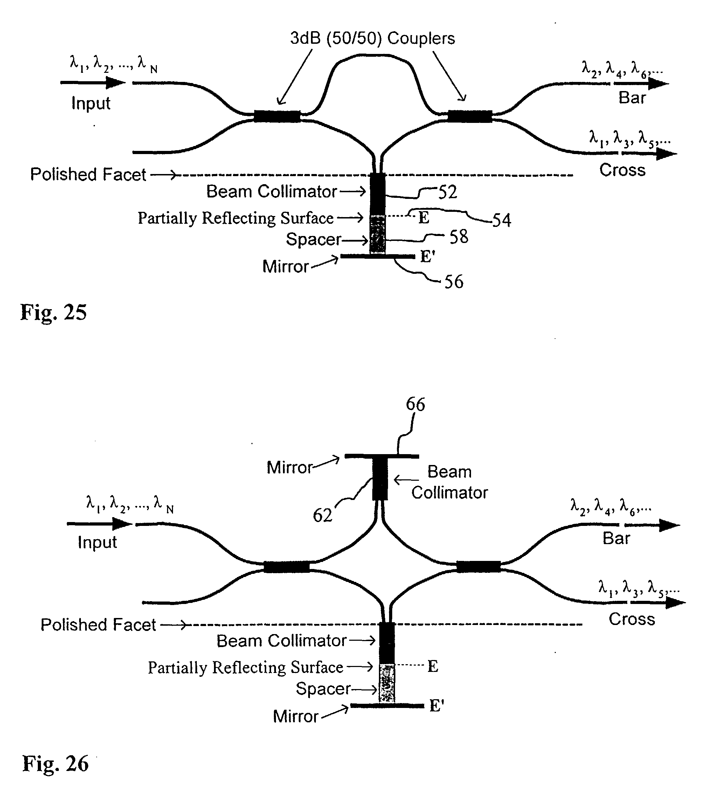

Fig. 26 which will be described in more detail hereafter, compensates for this behaviour such that the device is no longer polarisation dependent.
Referring now to Fig. 24, an alternative embodiment is shown wherein the resonator is formed by employing two materials having different refractive indices. Light is partially reflected at the boundary of the two materials due to Fresnel reflection. The difference between the refractive indices has to relatively high to achieve the desired reflectivities. a waveguide 41a having a refractive index n1 is directly coupled to a waveguide having a refractive index 42a. Waveguides 41b and 42b are disposed in parallel forming the GT resonator.

Another embodiment of the invention is shown in Fig. 25 which is a hybrid device where an MZ interferometer has been combined with a micro-optic GT resonator. The shorter arm 18a of the MZ is coupled to a beam collimator 52such as a graded-index lens. The resonating cavity is formed of a partially reflecting spacer 54 having a reflectivity E separated by a mirror 56 having a reflectivity E' by a spacer 58.

Fig. 26 illustrates another embodiment of the invention similar to that of Fig. 25 however a beam collimator 62 and a mirror 66 are disposed in the pair of upper arms 68a and 68b. The circuits of Figs. 26 - 28 provide embodiments of the invention wherein the device functions as a polarisation-independent wavelength interleaver by way of having the mirror 66 and beam collimator 62 disposed in the upper arm.

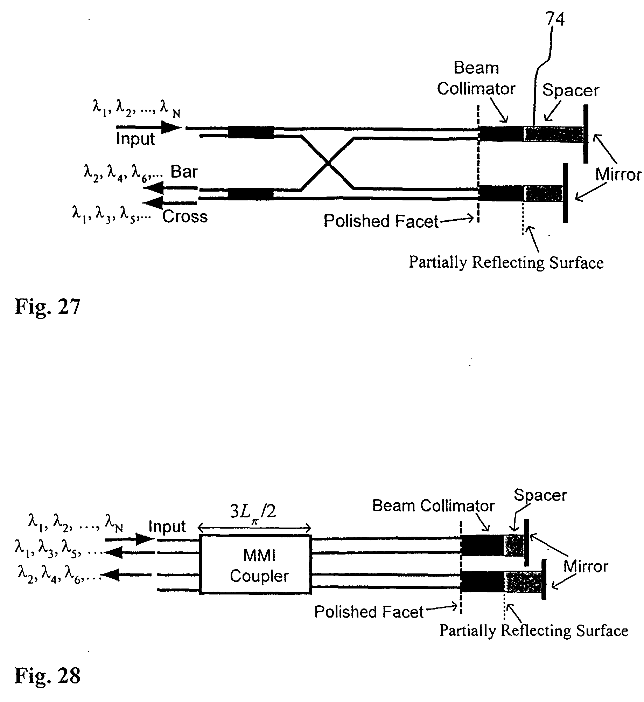

Fig. 27 is a folded version of the device shown in Fig. 26. An additional spacer 74 is disposed in the upper arm of the MZ to provide a required length difference between the two arms of the MZ.

Fig. 28 illustrates an embodiment similar to that of Fig. 27, wherein a 4x4 MMI coupler of length 3 L_{π}/2 replaces the two 50/50 couplers shown in Fig. 27.

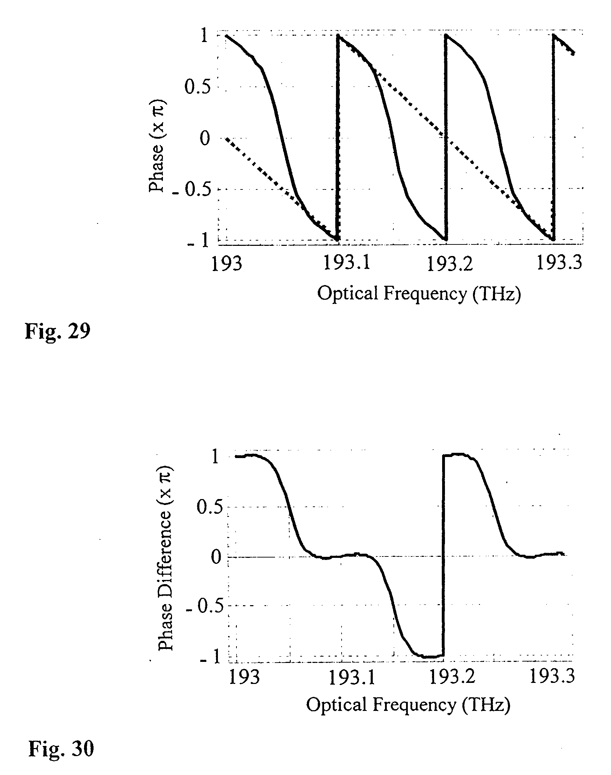

Fig. 29 illustrates the spectral phases of the optical fields of the MZ-resonator interferometer after the second 3dB coupler. The phase of the signal propagating within the longer arm of the MZ is a linear ramp (dashed line); the other curve represents the phase response of the GT resonator.

Fig. 30 shows the phase difference between the two optical fields of the MZ-resonator interferometer after the second 3dB coupler. The phase difference alternates between 0 and +π over consecutive wavelength channels equivalent to the FSR of the resonator.

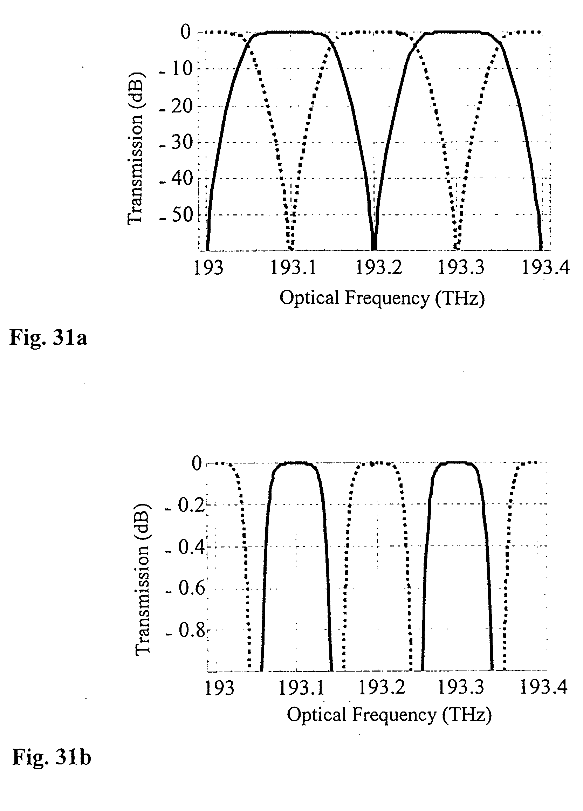

Fig. 31a shows the spectral transmissions of the two de-interleaved signals aₒᵤₜ₁ and aₒᵤₜ₂, at the output ports of the MZ-resonator interferometer. Fig. 31b illustrates an expanded view of -1 to 0dB range shows the ripples in the response. The reflectivity R₁ of the partially reflecting plate is 0.1.

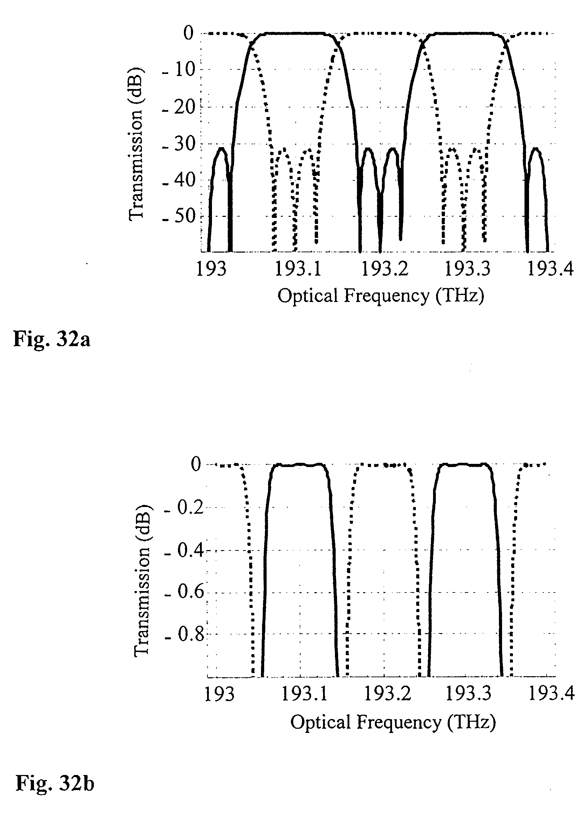

Fig. 32a shows the spectral transmissions of the two de-interleaved signals aₒᵤₜ₁ and aₒᵤₜ₂, for a different value of the reflectivity of the partially reflecting plate. It is seen from Figs 31a and 32a that by increasing the reflectivity of the partially reflecting plate, R₁, the response roll-off becomes steeper and both the channels bandwidth and cross-talk window increase while the side lobe levels also increase. This is illustrated more clearly in Table 1. Similar values for a well-designed coupler interferometer interleaver are shown in Table 2 to make the comparison more understandable. It is evident that the MZ-resonator interferometer has a steeper roll-off and, consequently better performance than the coupler interferometer in terms of cross-talk.

**Table 1**

| Channel bandwidth and the cross-talk window for MZ-resonator interferometers with different values of the reflectivity of the partially reflecting plate, R₁. Note that all bandwidth values have been normalised against the channels spacing, which is taken as 1. | | | |
|---|---|---|---|
| **R**_{**1**} | 1-dB BW | -15 dB x-talk window | -30 dB x-talk window |
| 0.1 | 0.85 | 0.635 | 0.34 |
| 0.17 | 0.89 | 0.736 | 0.57 |

**Table 2**

| Channel bandwidth and the cross-talk window for a coupler interferometer. | | | |
|---|---|---|---|
| **R**_{**1**}**=R**_{**2**} | 1-dB BW | -15 dB x-talk window | -30 dB x-talk window |
| 0.17 | 0.8 | 0.51 | 0.22 |

In the various embodiments of the invention, the free spectral range (FSR) of the GT-resonator is given by${\text{FSR}}_{\text{GT}} \text{= c/(2d)}$ where c is the speed of light in a vacuum and d is the optical length of the resonator cavity. The free-spectral range of the spectral response of the above interleavers are given by${\text{FSR}}_{\text{INTERLEAVER}} \text{= c/(d)}$

Furthermore, the design of the aforementioned interleavers require that the optical length difference between the two arms of the MZ interferometer be exactly equal to the optical length, d, of the resonator cavity.

The GT resonator is placed on the shorter arm.

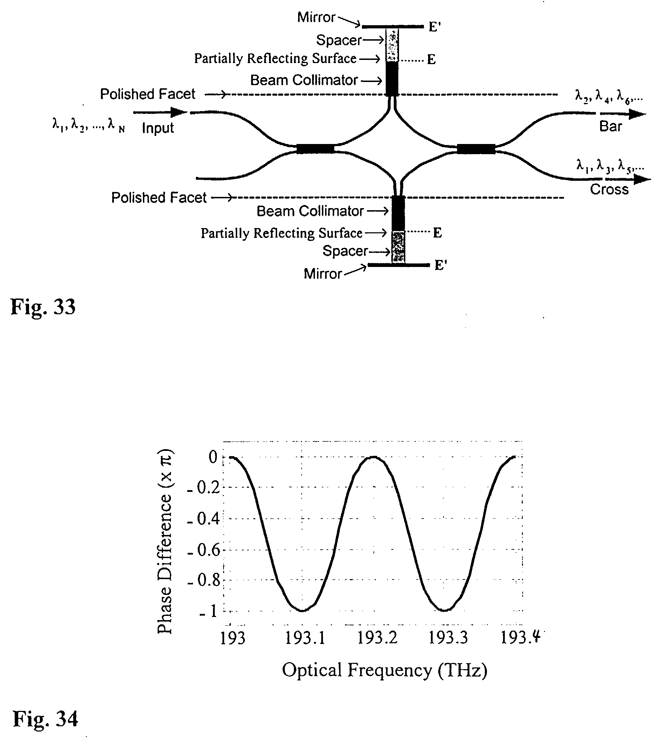

The interleavers described heretofore, in principle, all result in symmetric odd and even channels. Notwithstanding, the embodiment shown in Fig. 33 can be designed to provide either symmetric or asymmetric channels. In some instances, asymmetric interleaved channels are desired.

Referring now to Fig. 33, an interleaver is shown based on an MZ-interferometer combined with two GT resonators. The lengths of the cavities of the two GT resonators slightly differ from each other. The length difference between the two arms is approximately equal to the difference between the two lengths of the two cavities. The longer cavity is placed on the shorter arm. The free-spectral range of the spectral response of the interleaver is given by${\text{FSR}}_{\text{INTERLEAVER}} {\text{= c/(d}}_{\text{1}} {\text{+d}}_{\text{2}} \text{)}$ where c is the speed of light in a vacuum and d₁ and d₂ are the optical path lengths of the two GT resonator cavities. The choice of values of d₁ and d₂ determine whether the interleaver is symmetric or asymmetric. The length difference between the two arms of the MZ and the reflectivity R₁ of the front fact of the GT resonator depend on the choice of values of d₁ and d₂. The interleaver is symmetric if d₂ - d₁ = (p+1/4)λ, where λ is the wavelength and p is an integer number. Then the reflectivity R₁ =0.172 and the length difference between the two arms of the MZ is equal to (p+1/4)λ. This relation is true if the input coupler is a standard 2x2 coupler. If the input coupler is a centre-fed 1x2 MMI coupler or a Y-junction coupler, then the length difference between the arms is equal to pλ. In the optimum case, p=0. The interleaver would be asymmetric for all other values of d₂-d₁.

An advantage of the device of Fig. 33 compared with the device of Fig. 26 is that it requires temperature stabilisation only in the GT cavity, whereas the device of Fig. 26, similar to an MGTI device requires temperature stabilisation both in the cavity and in the arms.

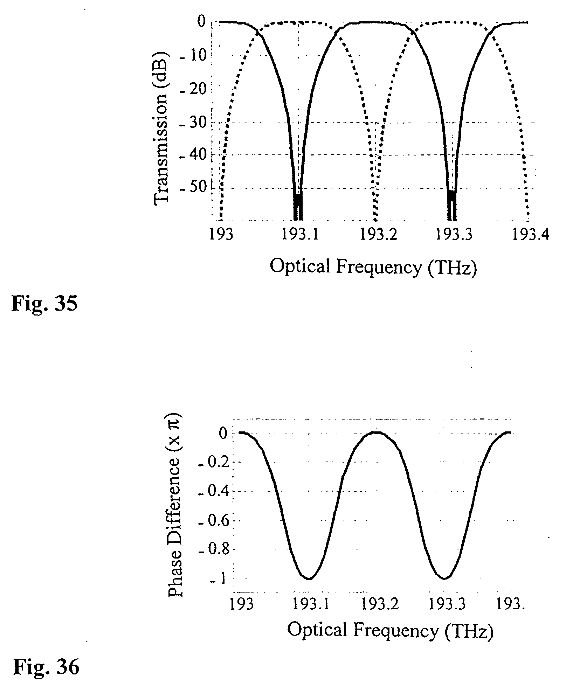

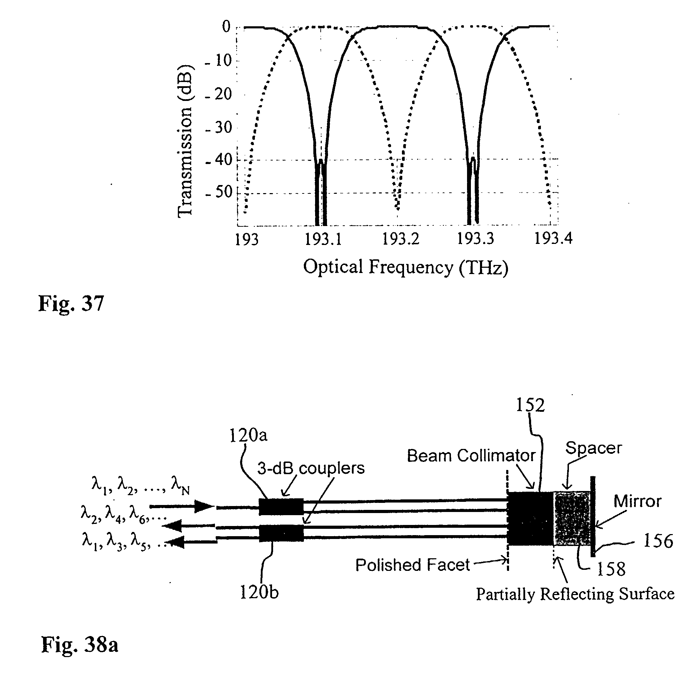

Fig. 34 illustrates the phase difference between the two optical fields travelling through the device after the second 3dB coupler. The phase difference alternates between 0 and +π. Fig. 35 shows the spectral transmissions of the two de-interleaved signals at the outputs of the device. Figs. 34 and 35 correspond to an interleaver that has been designed to be symmetric. Equivalently, Figs. 36 and 37 correspond to a device that has been designed to be asymmetric.

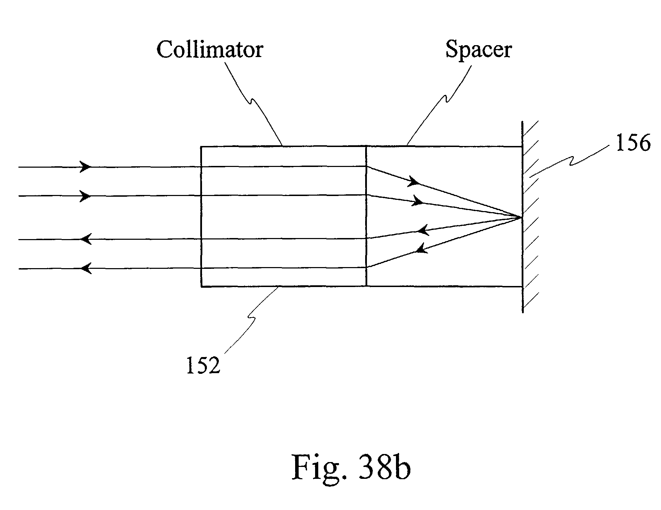

An alternative embodiment of the invention is shown in Figs. 38a and 38b. In contrast to the embodiment shown in Fig. 33, this embodiment only requires a single GT resonator.

The locations of the four waveguides (or optical fibres) at the input of the beam collimator has to be chosen appropriately so that the two angled paths through the GT result in slightly different FSR's as required in the design. The first 3dB coupler, preferably a 50/50 coupler has two output waveguides coupled directly to a single GT resonator consisting of a partially reflecting surface illustrated by a dotted line and having a mirror 156 at another end. Disposed between is a beam collimator 152 and a spacer 158.

Furthermore, the monolithic waveguide devices described in accordance with this invention can be fabricated in such a way as to make them relatively temperature stable by permanently tuning the device. In any of these embodiments one of the arms, aᵣ or at can be doped, for example with germanium and subsequently exposed to UV light, in order to vary the refractive index of a particular section of the doped arm. Alternatively, exposing one arm to light of a suitable intensity and duration can in some instances yield a required refractive index change to permanently tune the device. This is a convenient method of permanently adjusting the phase relationship between the two arms aᵣ and at thereby yielding very temperature tolerant devices.

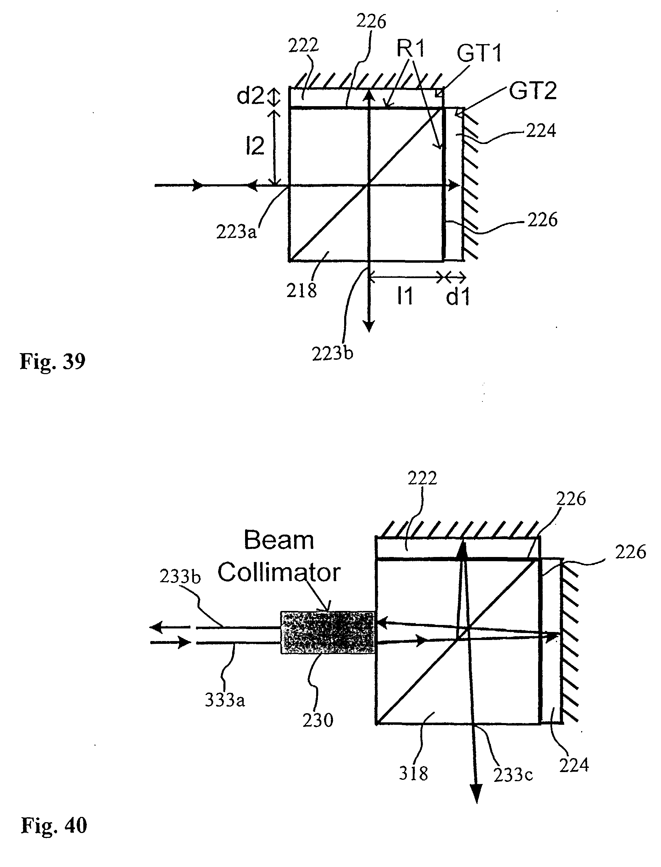

Referring now to Fig. 39, an interleaver/de-interleaver circuit in accordance with another embodiment of this invention is shown, wherein two GT etalons 222 and 224, each having a different free-spectral range (FSR) are directly coupled with a wavelength independent, polarisation insensitive 50/50 beam splitting cube 218. The FSR of this device is given by FSR_{Interleaver} = c/(d₁+d₂), where c is the speed of light in a vacuum and d₁ and d₂ are the optical path lengths of the two GT resonator cavities. The selection of values of d₁ and d₂ determine whether the interleaver will be symmetric or asymmetric. The optical length difference between the two arms of the interferometer and the reflectivity R₁ of the front fact of the GT resonators 222 and 224 depend upon the choice of values of d₁ and d₂. In the instance where the difference in path length between the two cavities d₂-d₁ = (p/2 + ¼)λ, where λ is the wavelength and p is an integer, the device provides interleaving/de-interleaving that results in symmetric odd and even channels; hence the channels are all of substantially the same bandwidth. A reflectivity R₁ of the both front partially transmissive reflectors 226 of the two GT etalons 222 and 224 is selected to be 0.18 and the optical length difference between the two arms of the cube is equal to I₁-I₂ = (q/4 = 1/8)λ, where q is an integer. In the optimum case, p=0 and q=0. However reflectivities of 0.17 to 0.19 have been found to be suitable for symmetric interleavers. The interleaver is asymmetric for all other values of d₂-d₁; as a general rule, for the asymmetric interleaver, the length difference (I₂-I₁) would be slightly smaller than d₂-d₁ if (d₂-d₁)<λ/4, and the length difference would be slightly larger than d₂-d₁ if (d₂-d₁)>λ/4. Simulation has indicated that reflectivities of up to 30 percent are suitable for values of R₁ for asymmetric interleavers.

Fig. 40 shows an alternative embodiment of an interleaver circuit in accordance with this invention similar to Fig. 39, however having an input beam being launched via a beam collimator in the form of a graded-index (GRIN) lens 330 at an angle rather than being normal to the end face of the beam splitting cube 318. This substantially lessens the complexity of the optical circuit by providing one input port 333a and two separate output ports 333b and 333c. In contrast, the circuit shown in Fig. 39 has one input/output port 223a and one output port 223b; to couple light outward from the output end of the input/output port an optical circulator or out-coupling device is required, adding to the cost and complexity of the device. Of course, it should be realised, that when the circuit of Fig. 40 is being used as an interleaver instead of a de-interleaver, the two output ports 333b and 333c serve as input ports, and the input port 333a serves as an output port for carrying an interleaved stream of channels. Although the circuit of Fig. 39 is not shown having a beam collimating/focusing lens coupled to ports 223a and 223b, the circuit requires such a lens at each port for coupling between the beam splitting cube and optical waveguides. In the circuit of Fig. 39 light is launched along an optical axis of such a lens. In Fig. 40, the positioning of the ports equidistant and offset by a predetermined amount at the outward end face of the beam collimator 330 provides the required angle.

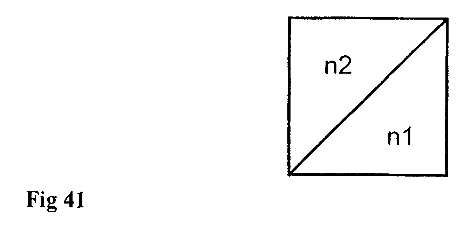

An alternative embodiment of the invention is shown in Fig. 41. wherein a beam splitting cube is made up of two portions, a first being of a refractive index nl and a second being of a refractive index n2. Here, the physical lengths of the two halves are equal, however the optical path lengths are slightly different as required.

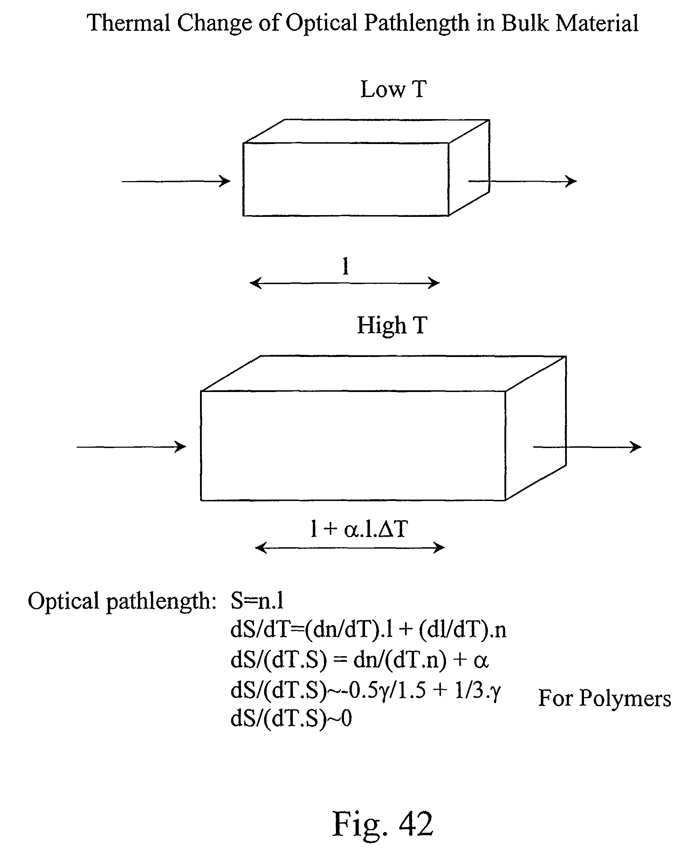

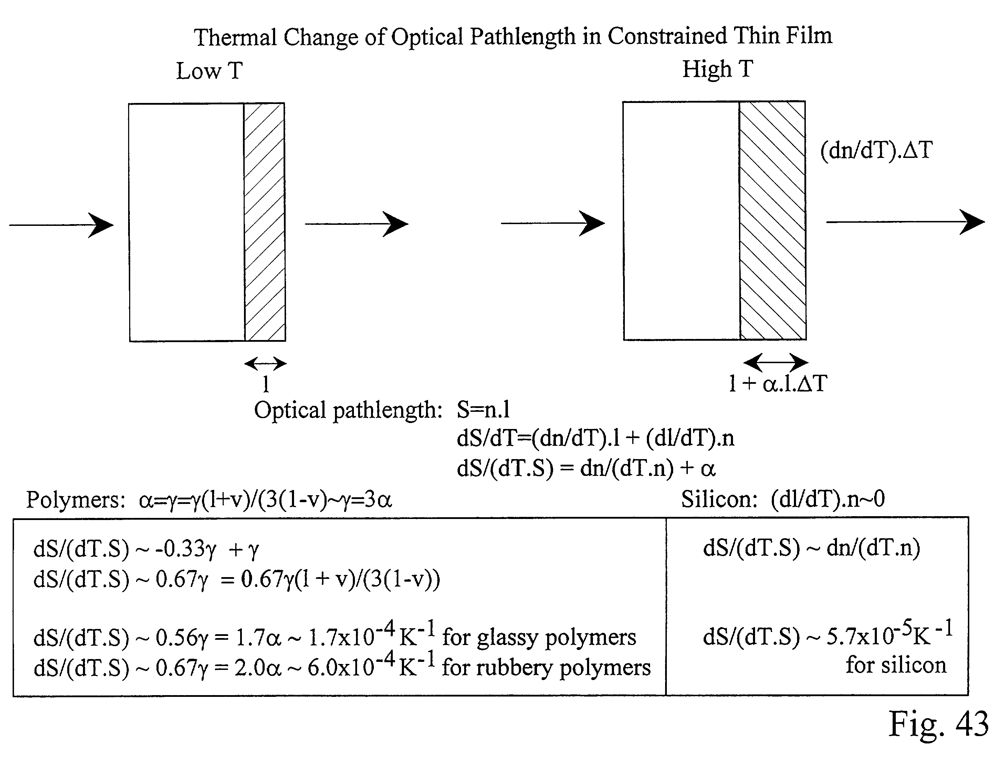

Figs. 42 and 43 illustrate another feature of polymer materials. Their path length change with temperature change is quite significant. In fact this property can be used in combination with glass or silica to fabricate hybrid thermo-optically tunable Fabry-Perôt tunable filters.

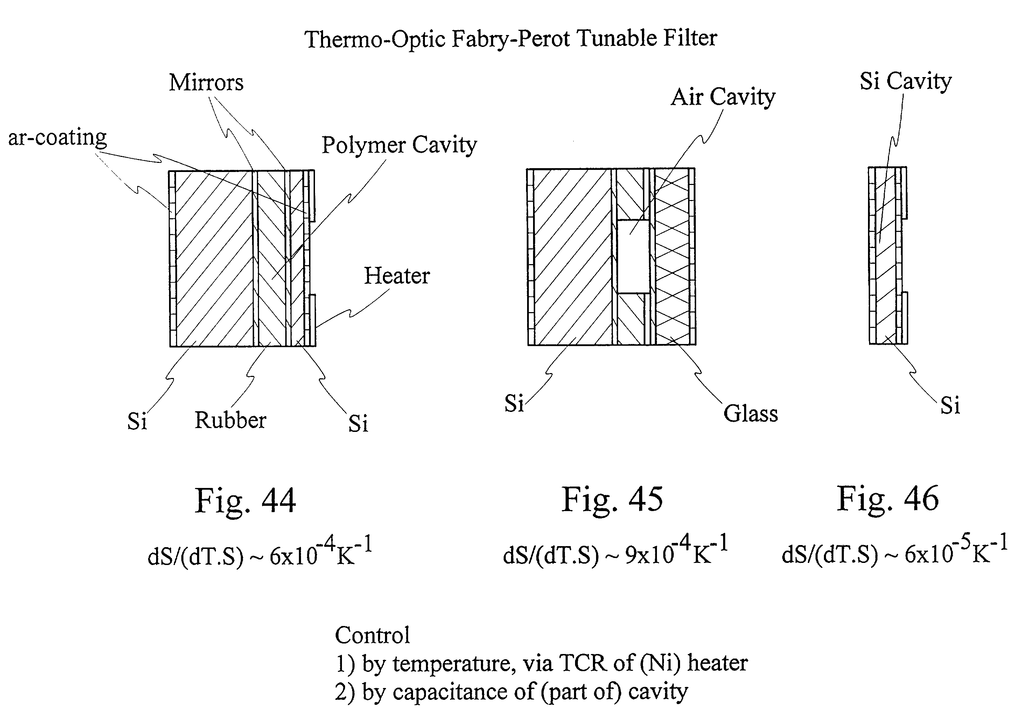

In Figs. 44 and 45 two Fabry-Perôt etalons are shown wherein a rubbery polymer expandable with the application of heat is utilised as a means of varying the gap between two reflective surfaces. Silicon is used as a heat-sink so that the response time of the device may be increased. Thus when heat is no longer applied, the silicon will provide a means of quickly conducting this heat energy to the case to which it is bonded. Or stated differently, the provision of the heat sink assists in bringing the polymer to ambient temperature.

The thermal expansion of the rubbery polymer film is enhanced (by a factor of 3) due to the fact that the film cannot expand in-plane because it is coupled to a non-expanding substrate. The high Poisson modulus of polymers and especially rubbery polymers enhances the out-of-plane expansion to let the volume expansion fully take place.

By utilising the properties of the rubbery polymer film described above, the interleaver/de-interleaver can be tuned to provide an device having an asymmetric output signal from a device that was symmetric in output response, or vice versa. The centre wavelength can be tuned by varying the FSR; these two are related and one cannot be changed without varying the other one.

Thus, on a limited scale, tuning to achieve symmetric or asymmetric channels can be achieved by varying the thickness the gaps on both GT etalons; if the centre wavelength is already at the right position, the size of both gaps should be changed to keep the centre wavelength fixed. However, tuning for symmetry or asymmetry on a larger scale requires changing (I1-I2) and the reflectivity R₁ as well as the two gaps.

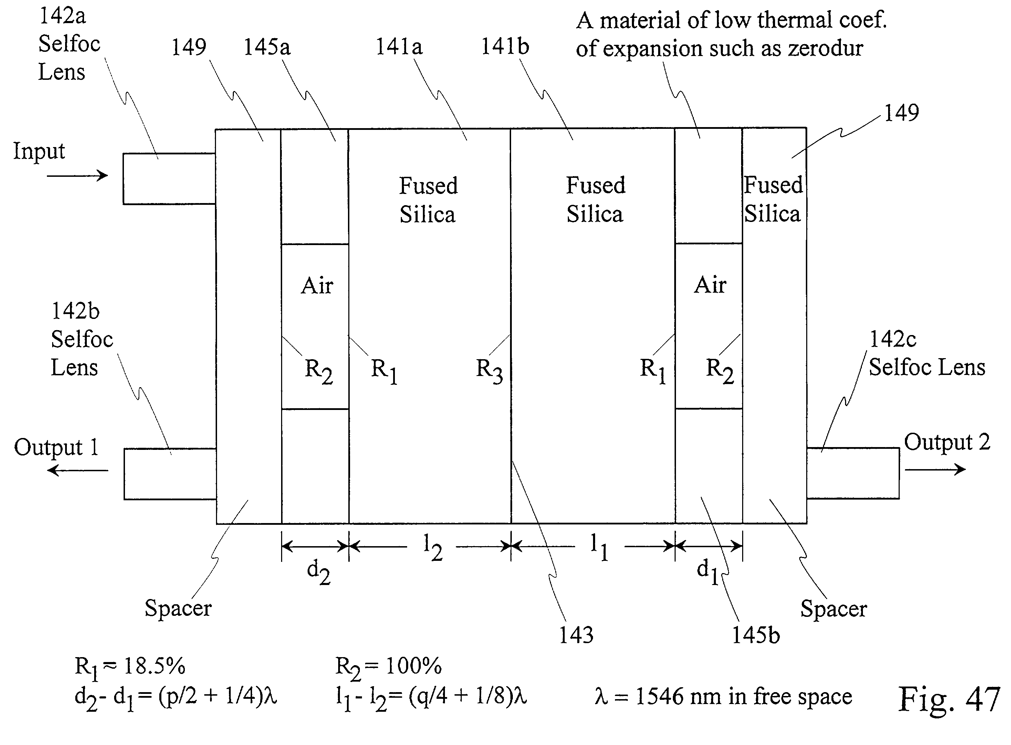

Turning now to Fig. 47 an alternative embodiment of the invention is shown. Two blocks 141a and 141b of fused silica having a reflective 50/50 coating 143 is disposed therebetween forming two beam splitters/combiners that are utilised to direct an input beam to two GT etalons 145a and 145b disposed beside the two blocks. A spacer block 149 separates each etalon and the input output1 and output2 lenses. The etalons 145a and 145b are comprised of a spacer element made of a material such as zerodur having a low thermal coefficient of expansion. Each etalon also has a fully reflective end face having a reflectance R2=100% and an opposing surface having a reflectance R1=18.5%. The etalon 145a has a gap defined by the spacer 145a of d2, and the etalon 145b has a gap defined by the spacer 145b of d1. The length of the fused silica blocks 141a and 141b are 12 and 11 respectively. The relationships between d1 and d2 are such that d2-d1 = (p/2+1/4)λ. The relationship between I1 and I2 are such that I1-I2 = (q/4 +1/8)λ, where λ = 1546 nm in free space. Input and output ports are disposed at output end faces of Selfoc graded index lenses 142a, 142b, and 142c.

The operation of the circuit of Fig. 47 is as follows. A beam of light incident upon the GRIN lens 142a of its optical axis is directed at an angle through the lens and through its optical axis as it exits the lens. The beam impinges the reflective coating of the beam splitting filter at 143 at half of the beam is reflected backwards while the other half continues along a straight through path into the etalon 145b. The reflected light that reflected from the filter 143 is directed into the GT etalon 145a. After the two beams pass through the respective etalons they are reflected outward and combine at the filter 143 and are directed to respective output ports 142b and 142c.

Although the configuration of the optical circuit shown in Fig. 47 is different than that shown in previous embodiments, the functionality and basic components are the same.

The skilled reader will appreciate that the invention is not limited to the particular examples disclosed as embodiments for the purposes of illustration. Moreover, it will be appreciated that the various aspects of the invention and other novel features and novel combinations of features disclosed herein can be used independently and in various combinations, without departing from the scope of the invention. Features disclosed in different embodiments can be combined as appropriate to the circumstances.

## Claims

1. A filtering device comprising:
a resonant optical cavity having a first and a second partially transmissive reflector, said resonant optical cavity having a first port disposed at the first partially transmissive reflector and a second port disposed at the second partially transmissive reflector; and,
means for combining light beams, said means being optically coupled with the first and second ports of the resonant optical cavity, said means being capable of combining light beams exiting the first and second port so that they interfere to provide one or more output beams of light.

2. A filtering device as defined in claim 1, wherein the resonant optical cavity has an input port and wherein the first and second ports disposed at the first and second partially transmissive reflectors, respectively, are two output ports.

3. A filtering device as defined in claim 1 or 2, wherein the device is capable of filtering an optical signal having a channel having centre wavelength of λ_{c}, and wherein the first and second partially transmissive reflectors are disposed at least 5λ_{c} apart.

4. A filtering device as defined in claim 3, wherein the optical cavity is an etalon, and wherein the first and second partially transmissive reflectors are first and second end faces of the etalon, respectively.

5. A filtering device comprising:
an optical ring resonator having a first and a second waveguide coupled thereto, one of the first and the second waveguides having an end for receiving an input signal to be filtered, the first and the second waveguide being optically coupled with the optical resonator at a first and second location respectively, for allowing light to couple into the resonator from one or more of the waveguides and or into one or more of the waveguides from the resonator;
an optical coupler for coupling light within the two waveguides between said waveguides, the coupler being at a location along the waveguides such that output ends provide a filtering of said input light.

6. A filtering device as defined in claim 4, further comprising first and second waveguide arms disposed between the first and second output ports and the means for combining respectively, and wherein the etalon is a low finesse Fabry-Perôt etalon.

7. A filtering device as defined in claim 6, wherein the first and second waveguide arms are optical fibres.

8. A filtering device as defined in claim 4, including a first waveguide arm coupled between the first output port and the means for combining light beams exiting the first and second output ports, and a second waveguide arm coupled between the second output port and the means for combining light beams exiting the first and second output ports so that they interfere.

9. A filtering device as defined in claim 7 further comprising a phase shifter disposed between one of the first and second ports and the means for combining.

10. A filtering device as defined in claim 2, wherein the resonant optical cavity, comprises an odd number of resonant optical cavities, at least one of the optical cavities having a free-spectral range of 5λ_{c} wherein the device is capable of filtering an optical signal having a channel having centre wavelength of λ_{c}.
